# EUROPEAN PATENT APPLICATION

(11) **EP 1 544 933 A2**
(43) Date of publication of application: **22.06.2005**
(21) Application number: 04029872.1
(22) Date of filing: 16.12.2004
(51) Int. Cl.: H01M 8/04, H01M 8/06

(54) **Fuel cell system, operating method thereof, program and recording medium**

(30) Priority: 17.12.2003 JP 2003420039
(71) Applicant: MATSUSHITA ELECTRIC INDUSTRIAL CO., LTD., Kadoma-shi, Osaka 571-8501 (JP)
(72) Inventor: Kobayashi, Susumu, Ikoma-shi Nara 630-0134 (JP); Matsumoto, Toshihiro, Takatsuki-shi Osaka 569-1144 (JP); Tomizawa, Takeshi, Ikoma-shi Nara 630-0123 (JP); Kusakabe, Hiroki, Sakai-shi Osaka 590-0113 (JP)
(74) Representative: Jung HML Patentanwälte

(57) **Abstract**

A fuel cell system comprising the stack having a gas distribution means of guiding reaction gas into electrodes of respective single cells, the gas supplying sections for supplying the reaction gas to the stack, the gas humidifying section for humidifying the reaction gas which are disposed between the gas supplying sections and the electrode inlet of the gas distribution means, and the controlling section for controlling the water vapor content of the reaction gas supplied at least to one of the electrodes so as to exceed the saturated water vapor content at the temperature of at least one of the electrode inlets of the gas distribution means.

## Description

### BACKGROUND OF THE INVENTION

### Field of the invention

The present invention relates to a fuel cell system and a method for operating the fuel cell system.

### Related Art of the invention

Apolymer electrolyte fuel cell is based on principles in which one side of the polymer electrolyte membrane is exposed to fuel gas and the other side is exposed to oxidizing agent gas such as air, causing chemical reactions through an ion-exchange membrane to synthesize water and the resultant reaction energy is taken out electrically.

A basic electricity generating element of the fuel cell is provided with a polymer electrolyte membrane transporting hydrogen ion selectively and a pair of carbon powder-based catalyst layers (anode catalyst layer and cathode catalyst layer) supporting a platinum metal catalyst formed on both surfaces of the polymer electrolyte membrane. It is also provided with a mainly carbon fiber-based gas diffusion electrode having both air permeability and electric conductivity which is interposed between the pair of catalyst layers. The polymer electrolyte membrane, the pair of catalyst layers and the gas diffusion electrode are collectively referred to as electrolyte membrane/electrode conjugate. Hereinafter, the electrolyte membrane/electrode conjugate is referred to as MEA (membrane-electrode-assembly).

This fuel cell is also provided with a sealing gasket disposed in such a fashion to interpose the polymer electrolyte membrane around the electrode of the MEA. The MEA-gasket assembly is fixed and interposedbetween an anode separator (electrically conductive bipolar plate) with a fuel gas flow path being formed and a cathode separator with an oxidizing agent gas flow path being formed. Further, the anode separator is electrically connected with the cathode separator through an external circuit.

When fuel gas (usually, hydrogen gas) and oxidizing agent gas (usually, air) are supplied respectively to the anode separator and the cathode separator in this system, the following chemical reaction occurs.

More particularly, fuel gas reaches an anode catalyst layer to be dissociated into a proton and electron on the anode catalyst layer through an anode gas diffusion electrode. Herein, the dissociated electron is collected through the anode gas diffusion electrode into an anode separator, whereas the proton is subjected to proton transfer by the ion-exchange membrane and transferred to the cathode catalyst layer.

The cathode catalyst layer is catalyzed reacted by the proton, the oxidizing agent gas reaching the cathode catalyst layer through the cathode gas diffusion electrode and the electron transferred to the cathode separator through the external connection circuit and then supplied to the catalyst layer through the cathode gas diffusion electrode reaction, thereby producing water.

Operational principles of a polymer electrolyte fuel cell is to electrically take out the energy difference where hydrogen and oxygen are compounded to generate water.

Herein, since the ion-exchange membrane is capable of carrying out a stable proton transfer in a well humidified state, the fuel cell needs water for operation. In most cases, the water is supplied at the same time as reaction gas through humidification of hydrogen and air supplied to the cell. Further, temperatures exceeding 60°C are necessary to favorably carry out the above reaction, and most of fuel cells are actually operated at temperatures 60°C to 80°C.

The electromotive force of the single cell consisting of the above MEA and the separator is normally in the range of 0.6 to 0.8V, depending on output current density. Thus, several dozen to several hundred single cells are laminated and used for producing electricity, and such laminated single cells are called a stack.

In addition, a fuel cell produces heat at the same time as generation of electricity, and the stack is greater in heat density than the single cell. Thus, the stack is usually provided with a cooling water flow path every 1 to 3 cells to forcibly water cool (there is a case where cooling media such as ethylene glycol is used), thereby maintaining the cell at favorable temperatures. Thus, in the stack three different fluids of fuel gas, oxidizing agent gas and water are supplied and drained, and the separator is provided with a pair of manifolds (common through-holes) respectively for these three fluids (plural pairs of manifolds depending on the case). These fluids are connected from the manifolds to grooves of the respective separators and branched into respective cells and cooling sections.

A commonly-used laminated fuel cell is structured so that, for example, fuel gas is branched through a fuel gas supplying manifold into a fuel gas flow path of the anode separator, consumed in accordance with cell reactions of the MEA in the course of the flow path and redundant fuel gas is discharged into a fuel gas discharging manifold, and these cells (battery section) and cooling sections are alternately overlapping-laminated, and the lamination is interposed between end plates through an electricity collecting plate and an insulating plate and fixed with bolts on both ends.

A fuel cell system represents the entire equipment of taking out electricity through operation of a stack. In the present system, mechanisms which directly drive the stack are a fuel gas supplying mechanism for converting commercially available fuels such as LPG, LNG and gasoline by subjecting to water vapor reforming and supplying it to the stack, an oxidization gas supplying mechanism for humidifying air sent from a blower and supplying the air to the stack, a cooling water mechanism for supplying circulating cooling water to the stack and an electricity loading mechanism for loading electricity.

Further, humidification necessary for fuel gas is usually performed by using water added to fuel in the water steam reforming method. Humidification of air is also usually per formed by guiding a total heat exchange of cathode discharge gas (wet air) with air supplied from a blower to obtain a desired amount of humidification for the purpose of effectively utilizing water discharged from the stack. However, where water is added at a reforming reaction runs short under operational conditions of the cell and where water obtained by total heat exchange runs short under operational conditions of the cell, a membrane humidifier using cooling water discharged from the stack as water and heat sources is provided at a subsequent section. Membrane humidification and total heat exchange are usually conducted via a humidification membrane which allows water to permeate easily but not allow gas to permeate. An ion-exchange membrane (perfluorosulfonic acid membrane) used for the stack is also favorable for this purpose and commonly used.

Japanese Translation of International Application (Kohyo) No. 6-504403 has disclosed the most typical prior example on preferable operational conditions of the polymer electrolyte fuel cell and the means of embodying the same. The gist is described below as the first prior art.

A fuel cell is a device whereby hydrogen is allowed to electrochemically react oxygen and hydrogen to generate water and the potential difference is taken out as electricity. Since the thus-generated water elicits flooding of a catalyst layer (a phenomenon of ceasing electricity generation due to closure of the catalyst layer with water and subsequent prevention of gas permeation) , it is critically important to remove the water in terms of safe operation of the cell.

Water generated in the cathode can be discharged most effectively by constantly maintaining fuel gas or oxidizing agent gas at the water vapor content lower than that at the saturated dew point. To be more specific, the thus-generated water can be evaporated into oxidizing agent gas and discharged from the cell, at the same time together with redundant oxidizing agent gas, by maintaining oxidizing agent gas at the water vapor content lower than that at the saturated dew point. Further, since an ion-exchange membrane allows water to permeate easily, fuel gas is kept at water vapor pressure lower than the saturated dew point, thereby water generated at the cathode can be evaporated into fuel gas and discharged at the same time together with redundant fuel gas, after back diffusion of the ion-exchange membrane with water generated in the cathode.

Specific means of realizing the operational conditions is to apply pressure loss (pressure drop) between the gas intake section and discharge section. To be more specific, since the water absorption capacity increases in accordance with a decrease in pressure, water successively produced in a cell in association with reactions can be discharged effectively only by such a structure that gas pressure is decreased as the gas moves toward the discharge section. Such decrease in pressure can be realized (a) by provision of an orifice at the intake section, (b) extendingthe lengthof a flowpath, (c) changing the section area of the flow path, (d) increasing the friction coefficient of at least a part of the inner surface of the flow path or (e) setting a flow rate of hydrogen gas in the flow path substantially exceeds a volume of hydrogen gas converted into cation at the anode. Japanese Translation of International Application (Kohyo) No. 6-504403 has been so far described as above.

However, the inventor found that the above operational conditions were critically defective particularly when the cell was subjected to rated operation at a low current dens ity , with an emphasis placed on efficient electricity generation at the stack (in particular, cogeneration system for lowlands). To be more specific, if fuel gas and oxidizing agent gas fail to maintain the saturated water vapor content at all parts in a cell, a part where the ion-exchange membrane is unable to maintain the saturated water vapor content will be damaged with the lapse of time, resulting in loss of fuel cell life.

An example of a fuel cell system which eliminates the critical defect of the above example 1 of the prior art and can retain the fuel cell life for a long time is explained hereinafter as the second prior art.

The fuel cell electricity generation system of the second prior art comprises a polymer electrolyte fuel cell having a stack laminated with single cells, an anode gas supplying section for supplying fuel gas to the polymer electrolyte fuel cell and a cathode gas supplying section for supplying oxidizing agent gas. The anode gas supplying section is provided with reforming equipment of reforming a fuel gas precursor into hydrogen-rich fuel gas.

An anode gas humidifying section for humidifying anode gas is provided between the polymer electrolyte fuel cell of the second prior art and the anode gas supplying section. Further, a cathode gas humidifying section for humidifying cathode gas is provided between the polymer electrolyte fuel cell and the cathode gas supplying section. The anode gas humidifying section and the cathode gas humidifying section are provided with a total heat exchanger (basic equipment) for applying exhaust heat and water content of anode gas and cathode gas discharged from the polymer electrolyte fuel cell to anode gas and cathode gas, and a membrane humidifier using as heat and water sources the cooling water discharged from the stack, when necessary.

In the above-structured fuel cell electricity generation system of the second prior art, the humidification section is kept at a predetermined temperature on the basis of the temperature at which the stack operates, thereby the dew points of anode gas and cathode gas are adjusted. As a result, dew is generated inside the stack, whereby a solid polymer electrolyte membrane of the MEA contains a necessary and sufficient water content. Namely, according to the fuel cell electric generation system of the second prior art, flooding of the catalyst layer can be prevented and the solid polymer electrolyte membrane can be allowed to contain a sufficient water content.

As explained above, by adopting the fuel cell electricity generation system of the second prior art, the solidpolymer electrolytemembrane canbe allowed to contain a necessary and sufficient water content as appropriate, thus it is possible to solve the problem for which the fuel cell life cannot be maintained in the case of the rated operation with a low current density with an emphasis placed on efficient electricity generation at the stack (in particular, cogeneration system for lowlands).

As explained above, the fuel cell electricity generation system of the second prior art can solve the problem for which the fuel cell life cannot be maintained in the case of the rated operation with a low current density with an emphasis placed on efficient electricity generation at the stack (in particular, cogeneration system for lowlands). However, the fuel cell electricity generation system of the second prior art is unable to protect the fuel cell by allowing the solidpolymer electrolyte membrane to contain a necessary and sufficient water content as appropriate, if the fuel cell system is in an unavoidable non-equilibrium state in terms of operation, or at a halt or load fluctuation.

To be more specific, in the humidification mechanism (anode gas humidifying section and cathode gas humidification section) of the second prior art, a heat source for humidification at the anode is primarily reforming reaction water, secondarily exhaust anode gas discharged from the stack (hereinafter referred to as off-gas) and stack coolingwater, whereas that at the cathode is primarily exhaust cathode discharge gas discharged from the stack (hereinafter referred to as off air) and secondarily stack cooling water.

During load fluctuation, particularly when the load is reduced, cooling water discharged from the stack tends to decrease in temperature. This is a phenomenon caused when heat amount is reduced at a low loading state and heat release elements become relatively large, electricity is generated more effectively under a low loading operation in terms of the operational principles, resulting in a decrease in the heat amount, or a common rotary pump has difficulty in controlling the cooling water volume at a low loading state (difficulty in reducing the flow rate). Similarly, off-gas and off air are also unable to receive a sufficient heat amount at a low loading state due to heat release. As a result, a sufficient humidiation becomes difficult due to a decrease in water temperature in terms of operational principles of the total heat exchanger or a membrane humidifier as explained above. This phenomenon is also applied when the cell is halted.

When load is abruptly increased, the cell instantly needs water in proportion to the load, but heating elements of the humidification mechanism and the fuel supply mechanism are unable to meet the need due to time constants derived from heat capacity, thereby causing a temporary shortage of humidification.

Further, particularly in the water steam reforming method, reformed gas dewpoint tends to overshoot at starting the cell. As a result, when excessively humidified reformed gas is supplied to the fuel cell, the previously-described flooding may easily occur and when the load is attempted to be removed as it is, the cell may be broken due to electrode conversion.

The polymer electrolyte fuel cell system of the second prior art hadproblems that the deterioration rate is greater than continuous rated operation when the cell was started up and halted frequently or abruptly given a load fluctuation.

The present invention is to provide a fuel cell system capable of maintaining the entire area of the MEA in a state of water vapor saturationmore reliably, anoperationmethod thereof, a program and a recording medium for the same, with the above problems taken into account.

### SUMMARY OF THE INVENTION

The 1^{st} aspect of the present invention is a fuel cell system comprising,
a stack having a plurality of laminated single cells comprising an electrolyte membrane, a pair of gas diffusion electrodes disposed so as to sandwich said electrolyte membrane therebetween and a separator disposed so as to be interposed between said pair of gas diffusion electrodes from outside and in which gas flow path grooves of supplying fuel gas and oxidizing agent gas respectively to said gas diffusion electrodes are formed,
a gas supplying section of supplying said gas to said stack,
a gas humidifying section disposed between said gas supplying section and said gas flow path grooves for humidifying said gas, and
a controlling section of controlling so that a water vapor content contained in said gas supplied to said gas flow path groove exceeds a saturated water vapor content at the temperature of at least one of said gas flow path groove inlets where said gas is initially consumed at said gas diffusion electrode.

The 2^{nd} aspect of the present invention is the fuel cell system according to the 1^{st} aspect of the present invention wherein said controlling section controls the water vapor content of said gas so that the water vapor contained in said gas will not cause flooding in said electrolyte membrane.

The 3^{rd} aspect of the present invention is the fuel cell system according to the 1^{st} aspect of the present invention, wherein said controlling section is provided between said gas flow path grooves and said gas humidifying section and having a buffering section of adjusting the water vapor content of said gas supplied to said plurality of laminated single cells,
said buffering section comprises
a reserve section of reserving water content,
a heating section of heating the water content reserved by the reserve section,
a temperature detecting section of detecting the temperature of said reserved water content, and
a supply controlling section of controlling said heating section so that the temperature of said water content is kept higher than the temperature at the electrode inlet part of said gas flow path grooves to vaporize again said water content and supplying said vaporized water content to at least one of said electrodes.

The 4^{th} aspect of the present invention is a fuel cell system comprising,
a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside, in which gas flow path grooves of supplying fuel gas and oxidizing agent gas respectively to said gas diffusion electrodes are formed,
a gas supplying section of supplying said gas to said stack,
a gas humidifying section disposed between said gas supplying section and said gas flow path grooves of humidifying said gas, and
a buffering section provided between said gas flow path grooves and said gas humidifying section of adjusting thewatervapor contentof saidgas suppliedto saidplurality of the laminated single cells.

The 5^{th} aspect of the present invention is the fuel cell system according to the 4^{th} aspect of the present invention, wherein said buffering section comprises a reserve section of reserving water content,
a heating section of heating the water content reserved by said reserve section,
a temperature detecting section of detecting the temperature of said reserved water content, and
a controlling section of controlling said heating section so that the temperature of said water content is maintained higher than the temperature at the electrode inlet part of said gas flow path grooves to vaporize again said water content and supplying said vaporized water content to said at least one of the electrodes.

The 6^{th} aspect of the present invention is the fuel cell system according to the 5^{th} aspect of the present invention, wherein said reserve section controls a heat amount for condensing the water vapor supplied from said gas supplying section in excess of saturated water vapor content at inner temperatures of said buffering section, and
said controlling section vaporizes the condensed water vapor by using as a heat source at least one or more of the following heats:
(1) waste heat of a reforming equipment,
(2) heat of the fuel gas supplied from said reforming equipment to said stack,
(3) heat obtained by combustion of fuel,
(4) heat obtained by combustion of remaining fuel gas discharged from said stack, and
(5) waste heat of cooling water discharged from said stack.

The 7^{th} aspect of the present invention is the fuel cell system according to the 6^{th} aspect of the present invention, wherein heat obtained by combustion of said fuel or said remaining fuel gas discharged from said stack is obtained from a reforming equipment burner.

The 8^{th} aspect of the present invention is the fuel cell system according to the 6^{th} aspect of the present invention, wherein heat obtained by combustion of said fuel or remaining fuel gas discharged from said stack is obtained from dedicated burning equipment other than a reforming equipment burner.

The 9^{th} aspect of the present invention is the fuel cell system according to the 6^{th} aspect of the present invention, wherein said controlling section controls the heat amount of said one or more of the heats conducted into said buffering section on the basis of detection signals for detecting water vapor content supplied to said stack, thereby water vapor content contained in the gas supplied to said gas flow path grooves is controlled so as to exceed the saturated water vapor content at the temperature of said gas flow path groove inlet where said gas is initially consumed at said gas diffusion electrode.

The 10^{th} aspect of the present invention is the fuel cell system according to the 9^{th} aspect of the present invention, wherein said controlling section controls the heat amount of said one or more the heats by controlling a heat media amount.

The 11^{th} aspect of the present invention is the fuel cell system according to the 9^{th} aspect of the present invention, wherein the control of heat amount of said one or more the heats by said controlling section includes the control of heat amount by said reforming equipment or a dedicated burning equipment.

The 12^{th} aspect of the present invention is the fuel cell system according to the 6^{th} aspect of the present invention, wherein said one or more of the heats are supplied to said controlling section through a direct conduction of heat flux from the heat source.

The 13^{th} aspect of the present invention is the fuel cell system according to the 6^{th} aspect of the present invention, wherein said one or more of the heats are supplied to the controlling section through an indirect conduction of heat flux through the exchange of heat flux from the heat source with cooling water discharged from the stack.

The 14^{th} aspect of the present invention is the fuel cell system according to the 4^{th} aspect of the present invention, wherein 'the control parameter of said controlling section can be set to plural numbers in response to a plurality of operation modes.

The 15^{th} aspect of the present invention is the fuel cell system according to the 4^{th} aspect of the present invention, wherein said controlling section learns an optimal controllingparameter under operational conditions for controlling.

The 16^{th} aspect of the present invention is the fuel cell system according to the 4^{th} aspect of the present invention, comprising a gas inlet manifold of supplying said gas to said gas flow path grooves wherein said buffering section is directly connected with said gas inlet manifold.

The 17^{th} aspect of the present invention is the fuel cell system according to the 4^{th} aspect of the present invention, comprising a gas inlet manifold of supplying said gas to said gas flow path grooves wherein said buffering section is provided inside said gas inlet manifold.

The 18^{th} aspect of the present invention is the fuel cell system according to the 4^{th} aspect of the present invention, wherein said stack and said buffering section are insulated en bloc.

The 19^{th} aspect of the present invention is a method for operating a fuel cell system comprising,
a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside in which gas flow path grooves of supplying fuel gas or oxidizing agent gas respectively to said gas diffusion electrodes are formed,
a gas supplying section of supplying the gas to said stack, and
a gas humidifying section disposed between said gas supplying section and said gas flow path grooves of humidifying said gas, wherein the method for operating the fuel cell system comprises a controlling step of controlling so that the water vapor content of the gas supplied to said gas flow path grooves exceeds the saturated water vapor content at the temperature of said gas flow path groove inlet where the gas is initially consumed at said gas diffusion electrode.

The 20^{th} aspect of the present invention is a method for operating a fuel cell system comprising a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside in which gas flow path grooves of supplying fuel gas or oxidizing agent gas respectively to said gas diffusion electrodes are formed,
a gas supplying section of supplying said gas to said stack, and
a gas humidifying section disposed between said gas supplying section and said gas flow path grooves of humidifying said gas, wherein the method for operating the fuel cell system comprises an adjusting step of adjusting thewater vapor contentof saidgas suppliedto saidplurality of laminated single cells between said gas flow path grooves and said humidification section.

The 21^{st} aspect of the present invention is a program of the fuel cell system according to the 1^{st} aspect of the present invention for allowing a computer to function as a controlling section of controlling so that the water vapor content of said gas supplied to said gas flow path grooves exceeds the saturatedwater vapor content at the temperature of said gas flow path groove inlet where the gas is initially consumed at said gas diffusion electrode.

The 22^{nd} aspect of the present invention is a recording medium recording the program according to the 21^{st} aspect of the present invention, wherein the recording medium can be subjected to computer processing.

With the present invention, a fuel cell system capable of more reliably maintaining the entire area of the MEA in water vapor saturation, operating method thereof, program, and recording medium for the same can be provided.

### BRIEF DESCRIPTION OF THE DRAWINGS

Fig. 1 is a conceptual diagram of the fuel cell system of the first embodiment.
Fig. 2 is a side view of the stack of the fuel cell system of the first embodiment.
Fig. 3 (a) is a plan view of the separator of the fuel cell system of the first embodiment, (b) is a plan view of the separator of the fuel cell system of the first embodiment, and (c) is a side view of the separator of the fuel cell system of the first embodiment.
Fig. 4 is a constructional perspective view of the fuel cell system of the first embodiment.
Fig. 5(a) is a plan view of the buffering section separator of the fuel cell system of the first embodiment, (b) is a plan view of the buffering section separator of the fuel cell system of the first embodiment, and (c) is a side view of the buffering section separator of the fuel cell system of the first embodiment.
Fig. 6 is a side block diagram of the fuel cell system of the first embodiment.
Fig. 7 is a conceptual diagram of the fuel cell system of the second embodiment.
Fig. 8 (a) is a constructional perspective view of the fuel cell system of the second embodiment, (b) is an enlarged perspective view of important parts of the fuel cell system of the second embodiment, and (c) is an enlarged side view of important parts of the fuel cell system of the second embodiment.
Fig. 9 is a schematic view of the fuel cell system of the third embodiment.
Fig. 10 is a schematic view of the fuel cell system of the third embodiment.
Fig. 11 is a schematic view of the fuel cell system of the third embodiment.
Fig. 12 is a schematic view of the fuel cell system of the third embodiment.
Fig. 13 is a schematic view of the fuel cell system of the third embodiment.
Fig. 14 is a schematic view of the fuel cell system of the third embodiment.
Fig. 15 is a schematic view of the fuel cell system of the third embodiment.
Fig. 16 is a constructional perspective view of the stack of the fuel cell system shown in Fig. 15 of the third embodiment.
Fig. 17 is a schematic view of the fuel cell system of the third embodiment.
Fig. 18 is a view showing the graph of life characteristics under rated operation of the example 1 and a conventional fuel cell system.
Fig. 19 is a view showing the graph of life characteristics obtained when the fuel cell system of the example 1 and a conventional fuel cell system were operated at load fluctuation.
Fig. 20 is a view showing the graph of water balance when the fuel cell system of the example 1 was operated at load fluctuation.
Fig. 21 is a view showing the graph of the comparison between the life characteristics and the compliance with the number of laminations obtained when the fuel cell system of the example 1 was operated under rated continuous operation.
Fig. 22 is a view showing the graph of the comparison between the life characteristics and the compliance with the number of laminations obtained when the fuel cell system of the example 2 was operated under rated continuous operation.
Fig. 23 is a view showing the graph of the life characteristics obtained when the fuel cell systems of the example 2 and the example 3 were operated at load fluctuation.

### Description of the Reference Numerals

- 1: stack
- 2: anode gas supplying section
- 3: cathode gas supplying section
- 4: anode gas humidifying section
- 5: cathode gas humidifying section
- 6: anode heating-medium flow path
- 8: cathode heating-medium flow path
- 10: heat insulating material
- 20: node buffering section
- 21: anode buffer mechanism heat exchange section
- 22: anode buffer mechanism water-level detecting section
- 23: anode buffer mechanism humidity detecting section
- 24: drain port
- 25: anode buffer mechanism heating-medium supplying section
- 26: anode buffer mechanism heating adjusting valve
- 27: anode buffer mechanism drain valve
- 28: anode buffer mechanism controlling section
- 29: anode buffer mechanism reserve section
- 30: cathode buffering section
- 31: cathode buffer mechanism heat exchange section
- 32: cathode buffer mechanism water-level detecting section
- 33: cathode buffer mechanism humidity detecting section
- 34: drain port
- 35: cathode buffer mechanism heating-medium supplying section
- 36: cathode buffer mechanism heating adjusting valve
- 37: cathode buffer mechanism drain valve
- 38: cathode buffer mechanism controlling section
- 39: cathode buffer mechanism reserve section

### PREFERRED EMBODIMENTS OF THE INVENTION

Hereinafter, the embodiments of the invention are described with reference to the drawings.

### (First embodiment)

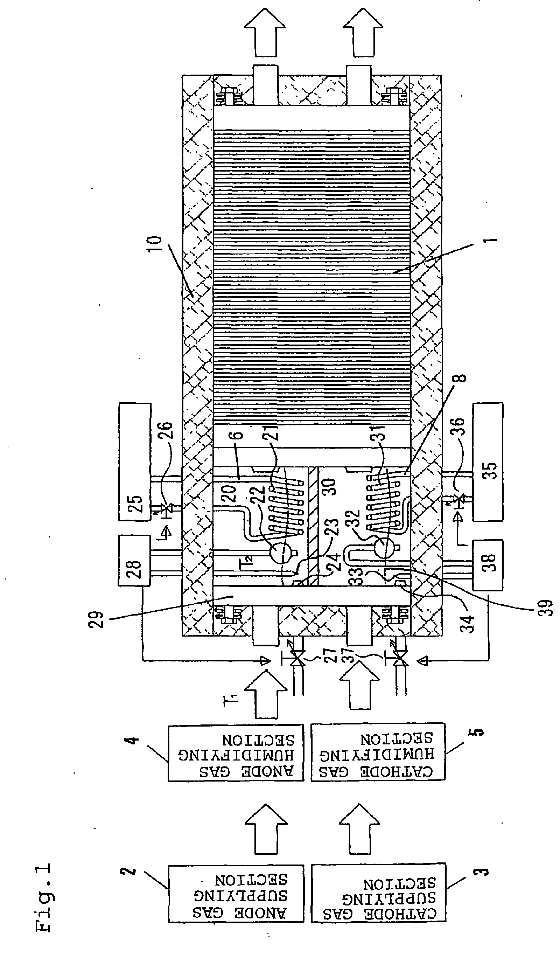

Fig. 1 is a conceptual diagram showing a basic structure of the fuel cell system of the first embodiment of the invention. The polymer electrolyte fuel cell system of the first embodiment is provided with a stack 1 on which single cells are laminated, an anode gas supplying section 2 for supplying fuel gas to the stack 1 and a cathode gas supplying section 3 for supplying oxidation gas. The anode gas humidifying section 4 for humidifying anode gas is disposed between the stack, 1 and the anode gas supplying section 2. Further, the cathode gas supplying section 5 for humidifying cathode gas is disposed between the stack 1 and the cathode gas supplying section 3.

First, the stack 1 shown in Fig. 1 is described.

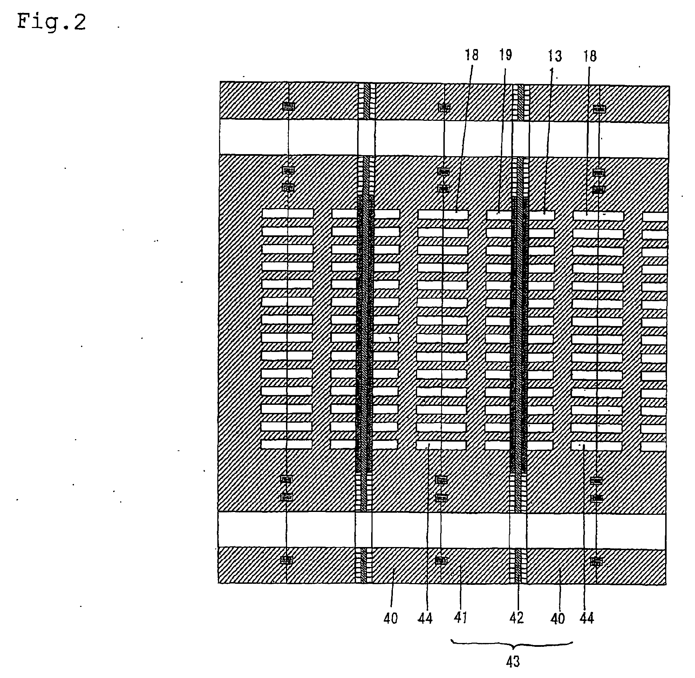

Fig. 2 shows a side view of the stack 1. As shown in Fig. 2, the stack 1 has a plurality of single cells 43 which are laminated. The single cell 43 is identical to the one described in the background of the invention. The single cell 43 is comprised of MEA 42 having a pair of gas diffusion layers and an electrolyte membrane, a gasket, a separator formed on the surface which an anode gas flow path makes contact with the MEA42 so as to supply fuel gas to the MEA42 and a separator formed on the surface which a cathode gas flow path makes contact with the MEA42 so as to supply oxidizing agent gas to the MEA42.

Both the anode and the cathode constituting the MEA42 show a gas diffusion electrode having gas diffusive property. To be more specific, the anode and the cathode may consist of catalyst layers having gas diffusive property or may be a lamination which forms the catalyst layer on the gas diffusion layer. In addition, the anode and the cathode may be a lamination in which one or more of other layers (for example, a porous layer which is gas diffusive, electron-conductive andwatershedding)isdisposedbetween the gas diffusion layer and the catalyst layer.

In the first embodiment, two types of separator which are examples of the invention are used as the above separator. Namely, one is the separator 40 having the fuel gas flow path 13 and the cooling water flow path 18, and the other one is the separator 41 having the oxidizing agent gas flow path 19 and the cooling water flow path 18.

These two types of separator are arranged so that the surface of the separator 40 on which the fuel gas flow path 13 is formed and the surface of the separator 41 on which the oxidizing agent gas flow path 19 is formed face each other, interposing the MEA42 therebetween. Such arrangement makes it possible to provide a cooling section 44 formed by the cooling water flow path 18 on both ends of the single cell 43. Although description is omitted, a gasket is disposed between the MEA42 and the separators 40 and 41 and also between the MEA42 and adjacent single cell 43.

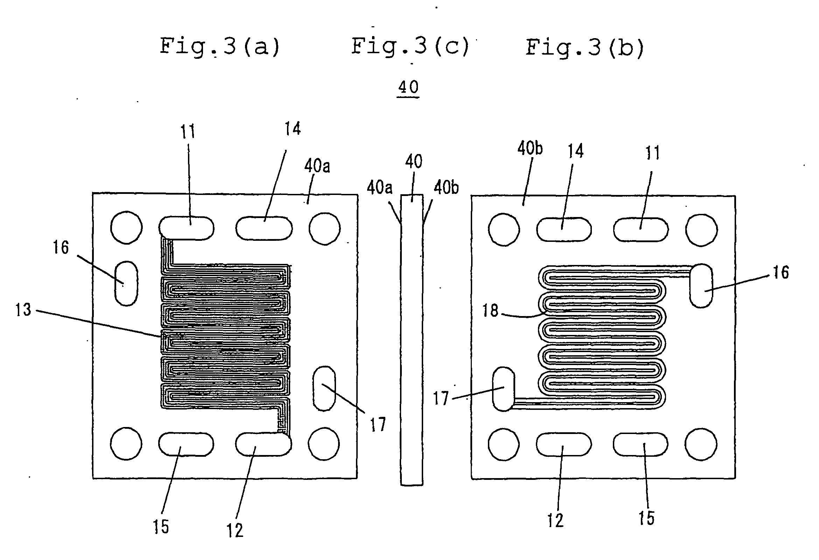

Fig. 3 (a) is a plan view of the separator 40 shown in Fig. 2. Fig. 3 (b) is a plan view of the surface shown in Fig. 2 opposite Fig. 3 (a) of the separator 40 shown in Fig. 2. Fig. 3 (c) is a side view of the separator 40. The separator 41 shown in Fig. 2 has the same structure as the separator 40, thus a detailed description is omitted.

As shown in Fig. 3 (a) , when viewed from the flat surface 40a of the separator 40, the anode gas inlet manifold 11, the anode gas outlet manifold 12, the cathode gas inlet manifold 14 and the cathode gas outlet manifold 15 are formed on the peripheral side. The cooling water inlet manifold 16 and the cooling water outlet manifold 17 are also formed. These respective outlet manifolds and inlet manifolds are provided at a point symmetry location to the center of the flat surface of the substantially square separator 40. The anode gas inlet manifold11 and the cathode gas inlet manifold 14 are provided so as to be adjacent to each other in the vicinity of one side of the flat surface 40a of the separator 40. The anode gas outlet manifold 12 and the cathode gas outlet manifold 15 are also provided so as to be adjacent to each other in the vicinity of the opposite side. The cooling water inlet manifold 16 and the cooling water outlet manifold 17 are provided on the remaining two sides, respectively. The cooling water inlet manifold 16 is provided in the vicinity of the anode gas inlet manifold 11.

Aplurality of parallel grooves constituting the fuel gas flow path 13 in zigzags are formed from the anode gas inlet manifold 11 to the anode gas outlet manifold 12. In addition, a plurality of parallel cooling water flow path grooves constituting the cooling water flow path 18 in zigzags are formed from the cooling water inlet manifold 16 to the cooling water outlet manifold 17 on the surface opposite that on which the fuel gas flow path 13 is formed.

The stack 1 shown in Fig. 1 has been described.

Then, sections other than the stack 1 shown in Fig. 1 are described.

To be specific, the anode buffering section 20 which is an example of the buffering section of the invention for adding water to fuel gas, as appropriate, as shown in Fig. 1 is provided between the anode gas inlet manifold 11 shown in Fig. 3(a) and Fig. 3(b) and the anode gas humidifying section 4 shown in Fig. 1. As shown in Fig. 1, the anode buffering section 20 is provided with the anode buffer mechanism reserve section 29, which is an example of the reserve section of the invention, directly connected with the anode gas inlet manifold 11 for reserving water content to be added to fuel gas.

In addition, the same as the above anode side, the cathode buffering section 30 which is an example of the buffering section of the invention is also provided between the cathode gas inlet manifold 14 and the cathode gas humidifying section 5 on the cathode side, as shown in Fig. 1. The cathode buffering section 30 has the cathode buffering section 39 which is an example of the reserve section of the invention, as shown in Fig. 1.

The stack 1, the anodebuffermechanismreserve section 29 and the cathode buffer mechanism reserve section 39 are integrally structured and covered with the heat insulating material 10, as shown in Fig. 1.

In Fig. 1, the anode buffer mechanism heat exchange section 21 for heating reserved water (an example of the heating section of the invention) and the anode buffer mechanism water-level detecting section 22 for detecting the level of reserved water are provided inside the above-described anode buffer mechanism reserve section 29. Also provided is the anode buffer mechanism drain port 24 for dischargingwater reserved in the anode buffer mechanism reserve section 29. In addition, the anode buffer mechanism humidity detecting section 23 for detecting the water vapor content in the buffer mechanism is provided in the anode buffer mechanism.

In Fig. 1, the same as the anode buffer mechanism reserve section 29, the cathode buffer mechanism heat exchange section 31(an example of the heating section of the invention) , the cathode buffer mechanism water-level detecting section 32, the drain port 34 and the cathode buffer mechanism humidity detecting section 33 are provided in the cathode buffer mechanism reserve section 39.

In Fig. 1, the anode heating-medium flow path 6 is formed from the anode buffer mechanism heating-medium supplying section 25 fixed outside the heat insulating material 10 to the anode buffer mechanism heat exchange section 21. The anode heating-medium flow path 6 is provided with the anode buffer mechanism heating adjusting valve 26 for adjusting the flow rate of heating media. Further, the anode buffer mechanism drain port 24 is connected outside the heat insulating material 10 and provided with the anode buffer mechanism drain valve 27 for adjusting discharge of reserved water. Also provided is the anode buffer mechanism controlling section 28 which controls the opening and closing of the anode buffer mechanism drain valve 27 in accordance with the level of the reserved water detected by the anode buffer mechanism water-level detecting section 22 and also controls the opening and closing of the anode buffer mechanism heating adjusting valve 26 in accordance with the humidity detected by the anode buffer mechanism humidity section 23.

More particularly, the anode buffering section 20 has the anode buffer mechanism reserve section 29, the anode buffer mechanism heat exchange section 21, the anode buffer mechanism water-level detecting section 22, the anode buffer mechanism humidity detecting section 23, the anode buffer mechanism drain port 24, the anode buffer mechanism heating-medium supplying section 25, the anode heating-medium flow path 6, the anode buffer mechanism heating adj usting valve 2 6 , the anode buffer mechanism drain valve 27 and the anode buffer mechanism controlling section 28.

Also, the same as the anode side, the cathode buffer mechanism heating-medium supplying section 35, the cathode heating-medium flow path 8, the cathode buffer mechanism heating adjusting valve 36, the cathode buffer mechanism drain valve 37 and the cathode buffer mechanism controlling section 38 are provided on the cathode side.

The heating medium supplied from the anode buffer mechanism heating-medium supplying section 25 to the anode buffer mechanism heat exchange section 21 is produced by elevating the temperature by heat exchanging the stack cooling water used for removing heat of the stack with at least any one of the following heat sources of (1) to (4), or is a combustion exhaust gas from any one of the heat sources of (1) to (4). The heat amount exchange is controlled with signals from the anode buffer mechanism controlling section 28 by reforming equipment or dedicated burners which are not illustrated here. Further, the time constant and the controlling parameter thereof covering the system operation behavior (halt or load fluctuation) are preset in controlling storage media not illustrated here in response to individual operational modes. Setting is carried outby finely adj usting the controlling parameter according to the learning control program. The same will be applied to the cathode side.
(1) Exhaust heat from the reforming equipment,
(2) Heat of the hydrogen-rich fuel gas supplied from the reforming equipment to the stack,
(3) Heat obtained by combustion of fuel, and
(4) Heat obtained by combustion of remaining fuel gas discharged from the stack

The above 1 (1) to (4) are described in detail by referring to the subsequent third embodiment.

The structures of the anode buffering section 20 and the cathode buffering section 30 shown in Fig. 1 are specifically described.

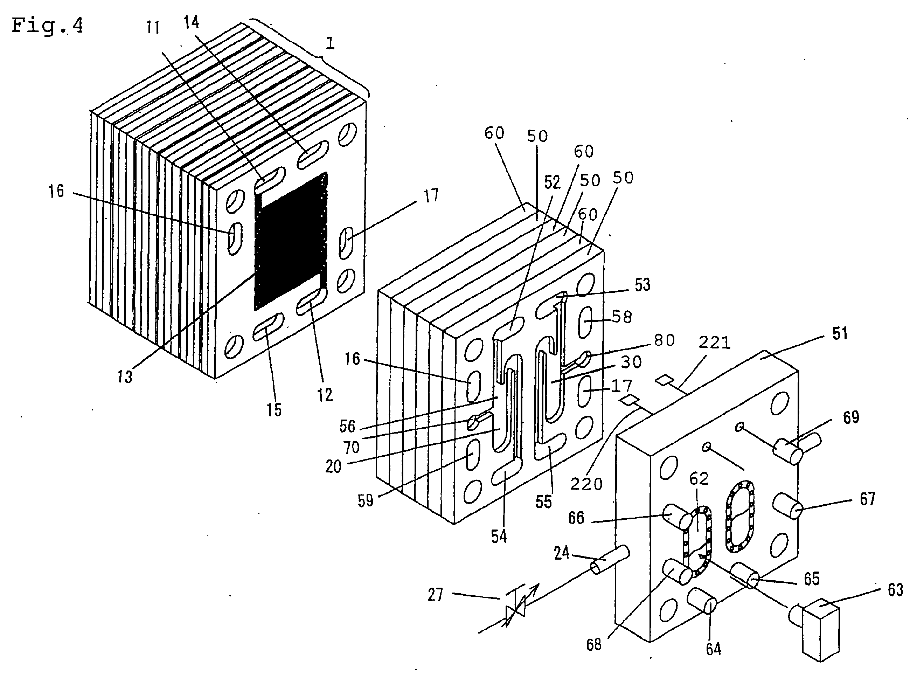

Fig. 4 shows constructional perspective views of the stack 1, the anode buffering section 20 and the cathode buffering section 30 shown in Fig. 1. The anode buffer mechanism reserve section 29 and the cathode buffer mechanism reserve section 39 shown in Fig. 1 are formed by lamination of a plurality of buffering section separators 50 and 60, as shown in Fig. 4. A plurality of buffering section separators 50 and 60 are laminated on the stack 1, and the end plate 51 is provided on the other side of the stack 1.

Next, the buffering section separator 50 is described in detail.

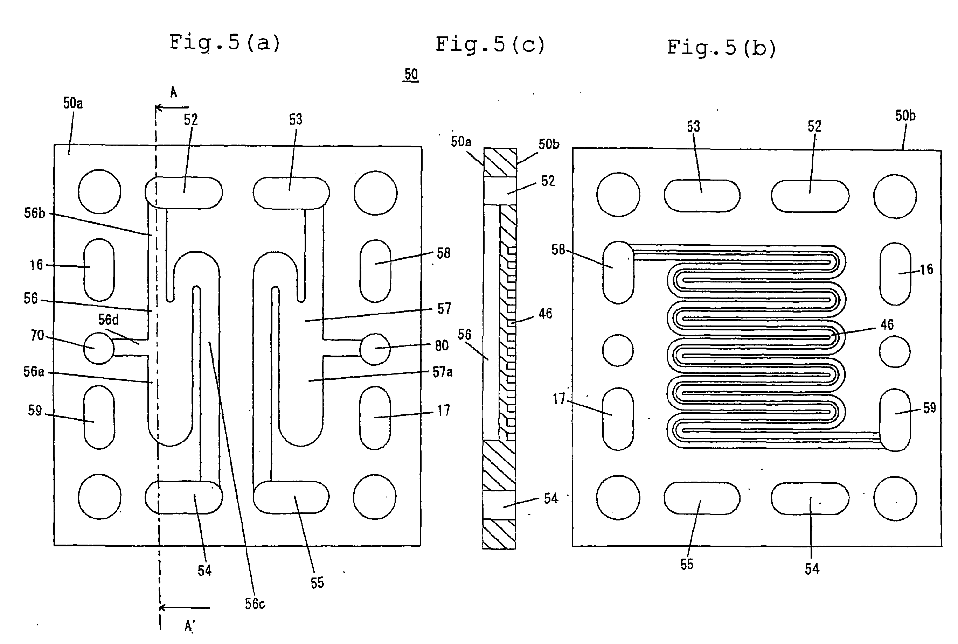

Fig. 5 (a) shows the surface on which the buffer mechanism reserve section grooves of the buffering section separator 50 are formed. Fig. 5 (b) shows the surface on which the heating-medium flow path grooves of the buffering section separator 50 are formed. Further, Fig. 5 (c) is a cross-sectional view taken along line A - A' in Fig. 5 (a).

As shown in Fig. 5 (a) , the anode gas outlet manifold 52 and the cathode gas outlet manifold 53 are formed side by side in the vicinity of the upper side when viewed from the laminated direction on one surface 50a of the buffering section separator 50. Further, the anode gas inletmanifold 54 and the cathode gas inlet manifold 55 are formed side by side at the lower parts of the respective gas outlet manifolds or in the vicinity of the lower side of the buffering section separator 50.

In addition, the heating-medium inlet manifold 58 and the heating-medium outlet manifold 59 are formed in the vicinity of two sides (one side each) (the right and left sides in Fig. 5 (a)) other than those on which the gas outlet manifolds 52, 53 and the gas inlet manifolds 54 and 55 are formed. The heating-medium inlet manifold 58 and the heating-medium outlet manifold 59 are formed at a substantial point symmetry location in relation to the center of the substantially square buffering section separator 50. The cooling water inlet manifold 16 and the cooling water outlet manifold 17 formed on the separator 40 are also formed on the buffering section separator 50.

The anode reserved water discharge manifold 70 is provided between the cooling water inlet manifold 16 and the heating-medium outlet manifold 59, which is in the vicinity of the buffering section separator 50. The cathode reserved water discharge manifold 80 is also provided between the cooling water outlet manifold 17 and the heating-medium inlet manifold 58, which is in the vicinity of the buffering section separator 50.

In addition, the anode buffer mechanism reserve section groove 56 is provided between the anode gas outlet manifold 52 and the anode gas inlet manifold 54, whereas the cathode buffer mechanism reserve section groove 57 is provided between the cathode gas outlet manifold 53 and the cathode gas inlet manifold 55 on the surface 50a of the buffering section separator 50.

The anode buffer mechanism reserve section groove 56 has the water reserve section groove 56a, the bottom of whichisclosed. The anode buffer mechanism reserve section groove 56 also has the gas outlet groove 56b formed upward to the upper part of the water reserve section groove 56a from the anode gas outlet manifold 52 and the gas inlet groove 56c formed upward from the upper part of the water reserve section groove 56a and then downward to the anode gas inlet manifold 54. Also formed is the water discharge groove 56d from the water reserve section groove 56a to the anode reserved water discharge manifold 70. Further, the cathode buffer mechanism reserve section groove 57 similar in configuration with the anode buffer mechanism reserve section groove 56 is formed between the cathode gas outlet manifold 53 and the cathode gas inlet manifold 55.

Further, the heating medium flow path groove 46 is formed on the surface 50b opposite the surface on which the above buffer mechanism reserve groove 56 is formed. This heating medium flow path groove 46 is formed in zigzags from the above heating-medium inlet manifold 58 to the heating-medium outlet manifold 59.

In the buffering section separator 60, the outlet and inlet manifolds, anode and cathode buffer mechanism reserve section grooves 56, 57 and the heating-medium flow path groove 46 are respectively formed so as to be symmetrical to the buffering section separator 50. Since the buffering section separator 60 is structured similar to the buffering section separator 50, a detailed description of the buffering section separator 60 is omitted.

When the buffering section separators 50 and 60 are laminated as shown in Fig. 4, the buffering section separators 50 and 60 are located corresponding to the respective manifolds of the separators 40 and 41 shown in Fig. 2 as follows.

Namely, the position of the anode gas outlet manifold 52 of the buffering section separators 50 and 60 shown in Fig. 5 (a), Fig. 5 (b) and Fig. 5 (c) agrees with that of the anode gas inlet manifold 11 of the separators 40 and 41 shown in Fig. 3 (a) and Fig. 3 (b) , when laminated.

The position of the cathode gas outlet manifold 53 of the buffering section separators 50 and 60 shown in Fig. 5 (a) , Fig. 5 (b) and Fig. 5 (c) is also in agreement with that of the cathode gas inlet manifold 14 of the separators 40 and 41 shown in Fig. 3 (a) and Fig. 3 (b) , when laminated.

Further, the position of the anode gas inlet manifold 54 of the buffering section separators 50 and 60 shown in Fig. 5 (a), Fig. 5 (b) and Fig. 5 (c) agrees with that of the cathode gas outlet manifold 15 of the separators 40 and 41 shown in Fig. 3 (a) and Fig. 3 (b) , when laminated.

In addition, the position of the cathode gas inlet manifold 55 of the buffering section separators 50 and 60 shown in Fig. 5 (a) , Fig. 5 (b) and Fig. 5 (c) agrees with (corresponds to) that of the anode gas outlet manifold 12 of the separators 40 and 41 shown in Fig. 3 (a) and Fig. 3 (b), when laminated.

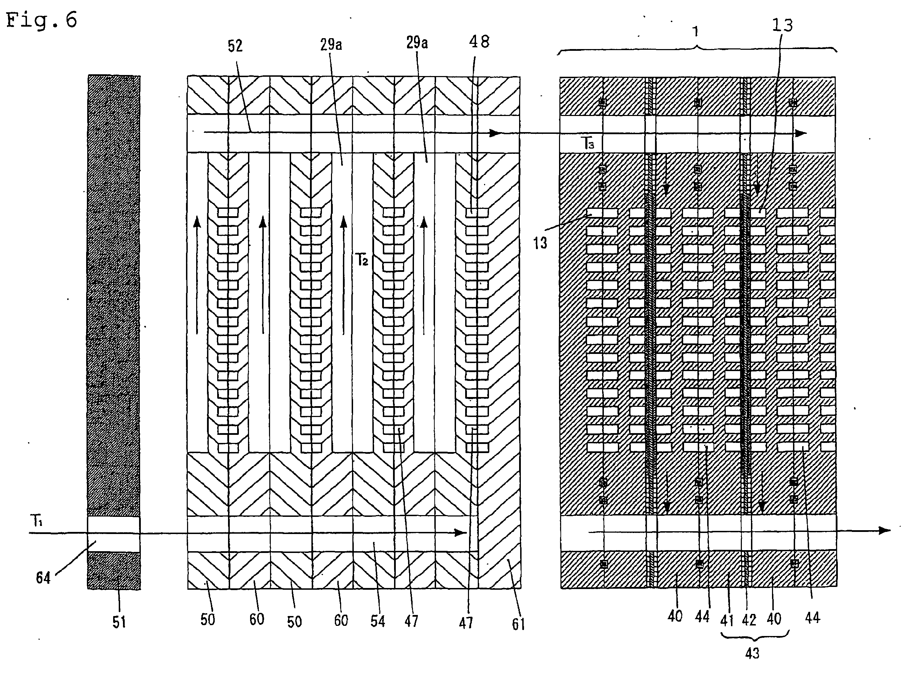

Fig. 6 shows the sectional side views of the buffering section and the stack 1 shown in Fig. 1. Namely, in Fig. 6, description is made by referring to the anode side as an example. As shown in Fig. 6, the buffering section separators 50 and 60 shown in Fig. 5 (a), Fig. 5 (b) and Fig. 5 (c) are put together with the surface on which the respective buffer mechanism reserve section grooves 56 are formed, thereby forming the buffer mechanism reserve composing section 29a. These buffering section separators 50 and 60 are laminated alternately to form a plurality of buffer mechanism reserve composing sections 29a, thereby forming the buffer mechanism reserve section 29, as explained in the conceptual diagram of Fig. 1.

Further, surfaces on which the heating medium flow path groove 46 (refer to Fig. 5(b)) of the separator 50 and the separator 60 is formed are put together to form the heating-medium flow path 47 between the respective buffer mechanism reserve composing sections 29a. The heat exchange section 48 which is an example of the heating section of the invention consists of a plurality of heating-medium flow paths 47. In Fig. 6, the anode heating-medium flow path 6 and the cathode heating-medium flow path 8 provided separately in the conceptual diagramof Fig. 1 are equivalent to the heating-medium flow path 47 which heats both the anode buffer mechanism reserve section 29 and the cathode buffer mechanism reserve section 39 shown in Fig. 1. Also in Fig. 6, the anode buffer mechanism heat exchange section 21 and the cathode buffer heat exchange section 31 shown in Fig. 1 are equivalent to the heat exchange section 48.

Further, as shown in Fig. 6, the buffering section separator in contact with the stack 1 is the buffering section end separator 61 on which no anode gas inlet manifold 54 is formed. Although cooling water inlet outlet manifolds 16 and 17 of the separators 40 and 41 shown in Fig. 3(a) and Fig. 3(b) are provided on the buffering section separators 50, 60 and 61, no flow path is provided thereon, thus cooling water is supplied to the stack 1 through the buffering section separators 50, 60 or 61. The heating-medium inlet and outlet manifolds 58 and 59 of the buffering section separators 50 and 60 shown in Fig. 5 (a) and Fig. 5(b) are not provided on the separators 40 and 41 of the stack 1 shown in Fig. 3 (a) and Fig. 3 (b). However, these inlet and outlet manifolds may be provided where the heating medium should be fed through the stack 1 in terms of the layout of the fuel cell system.

Further, in Fig. 6, the end plate 51 is provided on the other side of the stack 1 on which the buffering section separators 50 and 60 are laminated.

As shown in Fig. 4, the end plate 51 is provided with the optical level sensor 63 (equivalent to the anode buffer mechanism water-level detecting section 22 shown in Fig. 1) to detect the level of reserved water through the observation hole 62 at a position corresponding to the anode buffer mechanism reserve section 29 and the cathode buffer mechanism reserve section 39 shown in Fig. 1. Further, the anode buffer mechanism drain port 24 and the anode buffer mechanism drain valve 27 shown in Fig. 1 for discharging out of the system the water reserved in the abode buffer mechanism reserve section 29 shown in Fig. 1 are provided on the end plate 51 and the buffering section separators 50 and 60 as shown in Fig. 4. In addition, as shown in Fig. 4, the anode gas humidity sensor 220 and the cathode gas humidity sensor 221 are built into the end plate 51 at positions corresponding to the inside of the anode gas outlet manifold 52 and the cathode outlet manifold 53 of the buffer mechanism when laminated, and electrically connected with the controlling section, which is not illustrated here.

Although not illustrated here, the level sensor 63, the cathode buffer mechanism drain port 34 and cathode buffer mechanism drain valve 27 are also provided on the cathode side.

In the conceptual diagram of Fig. 1, the anode buffer mechanism water-level detecting section 22 for detecting the water level is equivalent to the level sensor 63 provided on the end plate 51 through the observation hole 62 as exemplified in Fig. 4, however, not limited thereto. To be specific, any anode buffer mechanism water-level detecting section 22 is acceptable as long as it can detect the level of the water reserved in the buffer mechanism reserve section. Further, it may be omitted in the auto drain type, as shown in Fig. 4.

In Fig. 4, the end plate 51 has the anode gas supplying pipe 64 and the cathode gas supplying pipe 65 at positions corresponding to the anode gas inlet manifold 54 and the cathode gas inlet manifold 55 of the buffering section separators 50 and 60. Similarly, the end plate 51 is provided with the cooling water supplying pipe 66, the cooling water discharge pipe 67, the heating-medium supplying pipe 68 and the heating-medium discharge pipe 69 at positions corresponding to individual outlet and inlet manifolds of the buffering section separators 50 and 60, respectively.

Operation of the fuel cell system of embodiment 1 structured above is described by referring to the anode gas side, however, this is applied to the cathode gas side.

A dew point given to fuel gas of the anode gas humidifying section 4 is defined as T1. The anode buffer mechanism controlling section 28 adjusts the anode buffer mechanism heating adjusting valve 26 to control the flow rate of the heating medium, thereby maintaining the temperature inside the anode buffer mechanism reserve section 29 at T2.

Temperature at the inlet of the fuel gas flow path 13 of the MEA42 is defined as T3.

Fuel gas produced at the anode gas supplying section 2 and given dew point of T1 at the anode gas humidifying section 4 flows through the anode gas supplying pipe 64 of the end plate 51 into the anode gas inlet manifold 54 of the buffering section separators 50 and 60, as shown by the arrow in Fig. 6.

Next, the fuel gas flows through the gas inlet groove 56c of the buffer mechanism reserve section groove 56 provided in the respective buffering section separators 50 and 60 shown in Fig. 5 (a) into the plurality of buffer mechanism reserve composing sections 29a shown in Fig. 6. Since no anode gas inlet manifold 54 is provided on the buffering section separator 61 in contact with the stack 1, fuel gas totally flows into the buffer mechanism reserve composing section 29a. Herein, of water vapor contained in the fuel gas, water vapor corresponding to the dew point at the temperature (T2) inside the anode buffer mechanism reserve composing section 29a is not liquefied inside the anode buffer mechanism reserve composing section 29a but supplied from the anode gas outlet manifold 52 shown in Fig. 5(a) and Fig. 5(b) to the anode gas inlet manifold 11 of the stack 1 shown in Fig. 4.

Next, the fuel gas is cooled down to T3 at the inlet of the fuel gas flow path 13 of the MEA42. Herein, when reserved water exists in the anode buffer mechanism reserve section 29 and the relationship of T2>T3 is established constantly, the water vapor is saturated in relation to T3 at the gas inlet of the MEA42. In order to make water vapor supersaturated in relation to T3, for example, the anode buffer mechanism controlling section 28 controls the heat amount supplied from the heating medium so that T2 is higher than T3 by a predetermined value. Then the anode buffer mechanical control section 28 controls the relationship of T3 and T2 so that T2 is higher than T3.by a predetermined value in a condition where the formula T3+10>T2 is satisfied, whereby flooding can be avoided.

Further, if the relationship of T1>T2 is constantly established in this system, the reserved water increases one-sidedly. Thus, the redundant reserved water is discharged from the anode buffer mechanism reserve section 29 through the anode reserved water discharge manifold 70 and the anode buffer mechanism drain port 24 shown in Fig. 4 and supplied to other supplementary equipment. For example, the water can be returned to the humidification sections 4 and 5 for reuse or utilized as water for operating the reforming equipment.

In addition, if the relationship of T1<T2 is temporarily established under certain operational conditions of this system, the shortage is supplied from the reserved water through spontaneous evaporation. Therefore, the water vapor content to be supplied to the cell will not run short, and the reserved water increases from the point when the system operates stably and satisfies the relationship of T1>T2.

As the above example, a supplementary heat source is used to maintain the temperature of the total heat exchanger (not illustrated here) at 78°C, thereby maintaining the dew point (T1) of the gas supplied at 74°C, which is then introduced into the anode buffer mechanism reserve section 29 kept at 72°C (T2) and supplied to the gas inlet port of the MEA42 kept at 70°C (T3=71°C). Table 1 shows saturated water vapor content of water at respective temperatures.

**[Table 1]**

| Saturated water vapor content | | | | | |
|---|---|---|---|---|---|
| Temperature | Saturated vapor pressure (mmHg) | Temperature | Saturated vapor pressure (mmHg) | Temperature | Saturated vapor pressure (mmHg) |
| 60 | 149.44 | 70 | 233.77 | 80 | 355.26 |
| 61 | 156.5 | 71 | 244.07 | 81 | 369.89 |
| 62 | 163.83 | 72 | 254.74 | 82 | 385.03 |
| 63 | 171.46 | 73 | 265.81 | 83 | 400.68 |
| 64 | 179.38 | 74 | 277.29 | 84 | 416.86 |
| 65 | 187.62 | 75 | 289.17 | 85 | 433.58 |
| 66 | 196.17 | 76 | 301.49 | 86 | 450.87 |
| 67 | 205.05 | 77 | 314.24 | 87 | 468.72 |
| 68 | 214.27 | 78 | 327.45 | 88 | 487.17 |
| 69 | 223.84 | 79 | 341.11 | 89 | 506.21 |

As explained above, an amount of water vapor supplied from the water vapor supplying system is controlled so as to be fundamentally excessive for the amount necessary for operating the cell, and the excessive part and the part of water vapor supplied which is liquefied inside the pipe and does not instantly work in preventing drying of the MEA are stored. The thus-stored water is again evaporated through exposure to a heat source higher than the cell temperature, providing water vapor content, which exceeds the saturated water vapor content at the cell temperature. Thereafter, control is given so that water vapor is cooled at the temperature of the MEA42 gas inlet in the stack manifold to saturate (in a state of super-saturation at the cell temperature detectable at this part), namely, controlled adjustment (buffering) is conducted.

As explained above, gas containing the water vapor content exceeds the saturated water vapor content at temperatures of the MEA gas inlet is supplied, thereby the thus-supplied gas can retain the saturated water vapor content at all parts of the MEA more reliably.

Further, provision of the buffering section makes it possible to evaporate water reserved inside and supplement the shortage, thereby guiding buffering or adjustment under circumstances where control problems occur such as a temporary reduction in the supply capacity of the gas humidifying sections 4 and 5 in meeting the requirements of the cell or the gas humidifying section is unable to supply the water vapor instantly in response to the cell which needs water vapor (time lag) in association with increased electric load.

The buffer mechanism reserve section is provided in such a way to directly connect with the gas inlet manifold, attaining heat insulation en bloc, thereby reduction in gas temperature can be prevented. To be specific, the system can be designed so that the reaction gas in which dew is formed in the piping from the gas humidifying sections 4 and 5 to the stack 1 to decrease actual water vapor content can be again returned to a dew point higher than the cell temperature and consumed in the cell without forming dew again.

Therefore, the present invention provides a fuel cell system which can stably operate for a long time and operational method thereof and safety in an application where the cell system is subjected to rated operation at a low current density (particularly for a cogeneration system for stationary use).

### (Embodiment 2)

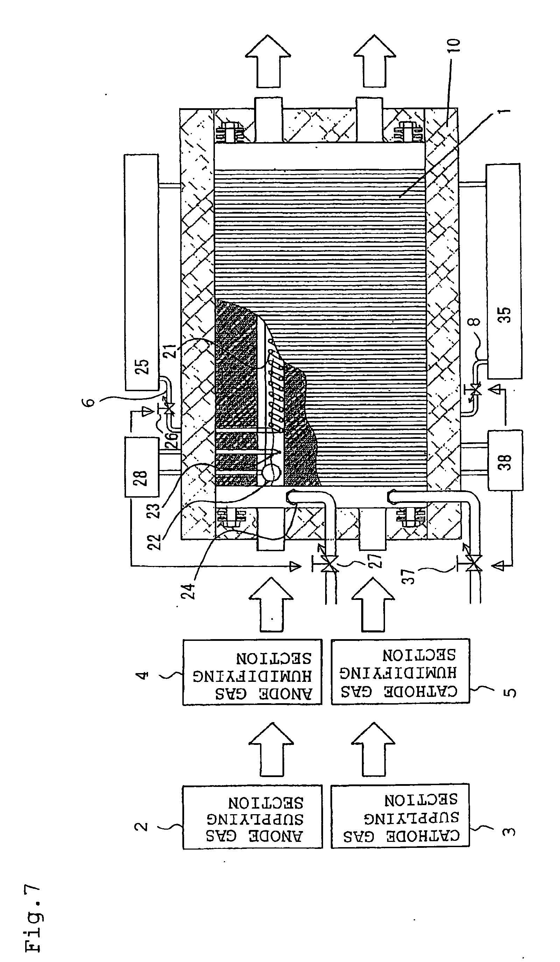

Fig. 7 is a conceptual diagram of the fuel cell system of the second embodiment. As shown in Fig. 7, the fuel cell system of the second embodiment is the same in fundamental composition as that of the first embodiment, however, different in that the anode buffering section and the cathode buffering section are provided inside the anode and the cathode gas inlet manifolds. Thus, a difference between the first embodiment and the second embodiment is mainly described. The same numbers are given to the constituent elements which are the same as the first embodiment.

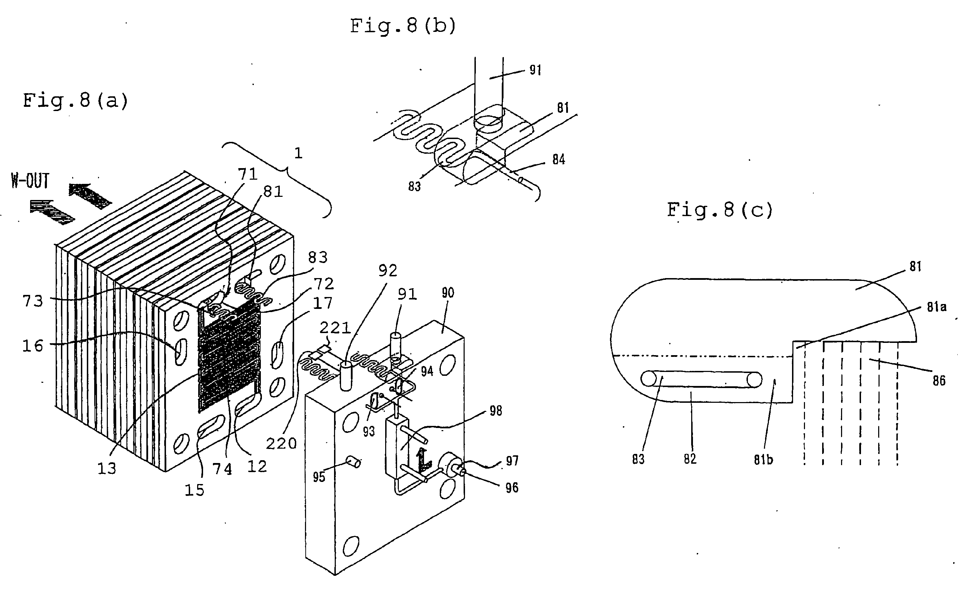

Fig. 8 (a) is a constructional perspective view of the stack 1 (Fig. 7) of the fuel cell system of the second embodiment. As shown in Fig. 8 (a) , the fuel cell system of the second embodiment is provided with the anode gas inlet manifold and the cathode gas inlet manifold 71 and 81 different in configuration from the anode gas inlet manifold and the cathode gas inlet manifold 11 and 14 of the first embodiment. Further, as different from the first embodiment, the second embodiment is not provided with the buffering section separator but with the stack 1 on which the end plate 90 is directly laminated.

Fig. 8 (b) is an enlarged perspective view of the cathode gas inlet manifold 81, further, Fig. 8 (c) is an enlarged plan view of the cathode gas inlet manifold 81 when the stack 1 is viewed from the end plate 90. As shown in Fig. 8 (c), in the cathode gas inlet manifold 81, the right side 81a of its bottom projects inside the cathode gas inlet manifold 81 to form the cathode buffer mechanism reserve section 82 , which is an example of the reserve section of the invention capable of reserving water at the right side 81b. The cathode buffer mechanism heat exchange section 83, an example of the heating section of the invention having the cathode buffer mechanism heating-medium flow path 84, is provided on the bottom of the cathode buffer mechanism reserve section 82. The oxidizing agent gas flow path groove 86, which is a groove for the oxidizing agent gas flow path 19, is formed from the right side 81a of the cathode gas inlet manifold 81. The cathode gas inlet manifold 81 provided on the end plate 51 is not through the end plate 90 and, as shown in Fig. 8 (b) , the end plate 90 is provided with the cathode gas supplying pipe 91 joined on the upper part of the cathode gas inlet manifold 81. In addition, as shown in Fig. 8 (a) , the end plate 90 has the anode gas humidity sensor 220 and the cathode gas humidity sensor 221 for detecting the humidity respectively in the anode gas inletmanifold 71 and the cathode gas inletmanifold 81.

As explained so far, the cathode buffering section 30 of the first embodiment is equivalent to the cathode buffering section 85 having the cathode buffer mechanism reserve section 82 and the cathode buffer mechanism heat exchange section 83 provided inside the cathode gas inlet manifold 81 in the second embodiment.

As the cathode side, the anode gas inlet manifold 71 is provided on the right side of the bottom with the anode buffer mechanism reserve section 72, an example of the reserve section of the invention and a groove of the fuel gas flow path 13 is formed from the left side of the bottom. As the above-explained cathode side, the anode buffer mechanism reserve section 72 is provided on the bottom with the anode buffer mechanism heat exchange section 73, an example of the heating section of the invention having the anode buffer mechanism heating-medium flow path 74.

As explained above, the anode buffering section 20 of the first embodiment is equivalent to the anode buffering section 75 which is provided inside the anode gas inlet manifold 71 in the second embodiment and having the anode buffer mechanism reserve section 72 and the anode buffer mechanism heat exchange section 73. The end plate 90 is also provided with the anode gas supplying pipe 92 joined on the upper part of the anode gas inlet manifold 71.

In addition, as the first embodiment, the end plate 90 is provided with the anode observation hole 93 and the cathode observation hole 94 for detecting the level of water respectively reserved in the anode buffer mechanism reserve section 72 and cathode buffer mechanism reserve section 82. Although not illustrated here, the observation holes 93 and 94 are respectively provided with an optical level sensor. Further, the end plate 90 has the cooling water supplying pipe 95 at a position corresponding to the cooling water inlet manifold 16 of the stack 1 and the cooling water discharge pipe 96 at a position corresponding to the cooling water outlet manifold 17.

The anode gas inlet manifold 71, the cathode gas inlet manifold 81 and the cooling water inlet manifold 16 are all located at the upper part of the stack 1. The stack is designed so that all fluid is fed in the vertical downward direction and the temperature is lower at a higher part of the stack (as fluid runs downward, it is heated due to the heating of the stack 1, and the temperature is therefore elevated at the lower part than at the upper part of the stack).

Further, the fuel cell system of the second embodiment is structured so that the cooling water discharge pipe 96 is provided with the branching valve 97, and cooling water branched by the branching valve 97 flows into the anode buffermechanismheating-medium flowpath 74 and the cathode buffer mechanism heating-medium flow path 84.

The external heat exchanger 98 is provided between the branching valve 97 and the anode buffer mechanism heating-medium flow paths 74 and 84. The heat exchanger is to supplement heat obtained from a heat source other than the stack 1 when the cooling water is not sufficient in temperature.

In the conceptual diagram of Fig. 7, the anode buffer mechanism water-level detecting section 22 for detecting the level of water is equivalent to the level sensor provided on the end plate 90 through the observation holes 93 and 94 in the example of Fig. 8, however, not limited thereto. More particularly, any anode buffer mechanism water-level detecting section 22 is acceptable, as long as it can detect the level of water reserved in the buffer mechanism reserve section.

The heating-medium supplying section for supplying heating media to the heating-medium flow paths 74 and 84 is illustrated separately in Fig. 7 from the anode buffer mechanism heating-medium supplying section 25 and the cathode buffer mechanism heating medium supplying section 35. However, since only one flow path is provided for supplying heating media to the heating-medium supplying sections 84 and 94 in Fig. 8 (a) , it is not necessary to provide the heating-medium supplying section separately.

Operation of the fuel cell system shown as the second embodiment of the invention is described below. Further, the description for the cathode side is applied to the anode side.

Oxidizing agent gas supplied from the cathode gas supplying section 3 and humidified at the cathode gas humidifying section 5 flows into cathode gas inlet manifold 81 from the cathode gas supplying pipe 91.

Next, the gas whose dew point is lower than the dew point inside the cathode gas inlet manifold 81 flows into the oxidizing agent gas flow path groove 86.

Water vapor content in the cathode gas inlet manifold 81 is constantlymonitoredby the cathode gas humidity sensor 221, and heat is supplied to the cathode buffer mechanism heat exchange section 83 so that the water vapor content always exceeds the saturated water vapor content at T3 (temperature at the oxidizing agent gas flow path inlet of the MEA42) , and the dew point is always kept higher than the temperature of the single cell 43 until reserved water is branched into the single cell 43 so that the reserved water can be evaporated.

The second embodiment of the invention is more advantageous than the first embodiment in that water vapor can be more uniformly distributed to individual cells particularly when a larger number of cells are laminated to result in a longer length of the stack for obtaining a higher voltage.

The second embodiment of the invention is superior to the first embodiment in that water vapor is distributed more uniformly to individual single cells. To be specific, in the first embodiment, a distance from the buffering sections 20 and 30 to individual single cells 43 is not uniform (actual length of piping) and particularly when the multiple layers are laminated, dew develops inside the manifold, resulting in a shortage of water vapor content at a part remote from the buffer mechanism. In the second embodiment, the length of piping is uniform and made the shortest, because of reservation of water inside the gas manifold.

Further, in the first embodiment, there is a problem in terms of packaging that the number of buffering section separators 50 and 60 to be laminated must be increased according to an increase in the number of stacks 1 to be laminated. However, the second embodiment is free of this problem, because a predetermined area of the gas manifold is used as a reservation space and the amount of reserved water is automatically made proportional to the number of laminations.

In the first and second embodiments, the controlling section of the invention corresponds to the anode buffer mechanism controlling section 28 and the cathode buffer mechanism controlling section 38, controlling the amount of re-evaporated water reserved content in the reserve section. The means of controlling the re-evaporated water content may be subj ected to feedback control by the humidity sensor, as explained above, or may be controlled similarly by detecting an absolute amount of evaporated water with the water level. To be specific, any controlling section is acceptable, as long as it is capable of controlling the heating section so as to maintain the temperature of the water reserved in the reserve section higher than that of the electrolyte membrane at the gas flow path groove inlet, and re-evaporating water content to supply it to a plurality of single cells.

Further, in the first embodiment, the buffering section of the invention corresponds to the anode buffering section 20 and the cathode buffering section 30, whereas in the second embodiment the buffering section corresponds to the anode buffering section 75 and the cathode buffering section 85. It is provided on both the anode side and the cathode side, but may be provided only on either side. Herein, the fuel cell system of the invention can be operated more stably for a longer time than conventional ones, but it is preferable that the buffering section is provided on both anode and cathode sides for preventing drying of the MEA.

In addition, the fuel cell system of the invention is not necessarily limited to the composition of the buffering section described in the first and the second embodiments. Any buffering section is acceptable, as long as it can adjust the water vapor content of reaction gas supplied to a plurality of single cells, thereby constantly supplying the water vapor content which exceeds the saturated water vapor content at the cell temperature (buffering). As explained above, heating medium may be used after heat exchange of cooling water discharged from the cell with a heat source other than the cell, or combustion exhaust gas from a heat source other than the cell may be directly introduced into the anode buffer mechanism heating-medium flow path 74 and the cathode buffer mechanism heating-medium flow path 84 to heat directly reserved water inside the manifold.

### (Third embodiment)

In the third embodiment, the heat supplying means of supplying heat to the buffer mechanism reserve section commonly used in the above first and the second embodiments is described.

The means of supplying heat to the buffer mechanism reserve section commonly used in the above first and second embodiments can be simply and reliably provided by a method in which fluid higher in temperature than T3 (temperature at the gas inlet of MEA) is conducted through the heating medium flow path into the buffer mechanism to perform the heat exchange with reserved water in the buffer mechanism. In an actual operation of a fuel cell system, the following alternatives are available as heat sources other than exhaust heat from the cell.
(1) Method of using exhaust heat from fuel reforming equipment of the anode gas supplying section 2,
(2) Method of introducing humidification hydrogen gas (approximately 150°C) supplied from the fuel reforming equipment,
(3) Method of burning fuel itself for this purpose, and
(4) Method of burning off-gas (redundant exhaust hydrogen gas in the anode) for this purpose

The alternatives are described. Description is made by referring to the first embodiment as an example, and the same is applied to the second embodiment.

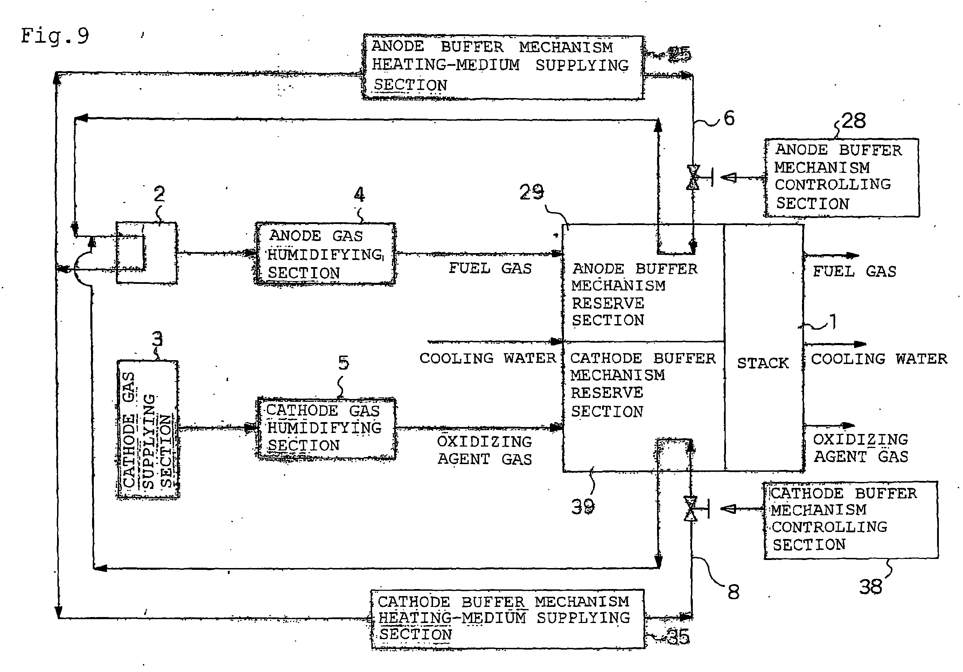

The alternative (1) is a method in which the exhaust heat is used as a heat source to heat heating media, since heating is needed on reforming of fuel gas to hydrogen-rich gas in the anode gas supplying section 2. Fig. 9 is a schematic view of the fuel cell systemof the thirdembodiment (1). Further, the same numbers are given to the compositions same as those of the first embodiment shown in Fig. 1.

As shown in Fig. 9, the anode heating-medium flow path 6 and the cathode heating-medium flow path 8 are provided with a flow path leading to the reforming equipment of the anode gas supplying section 2. Further, the anode heating-medium flow path 6 and the cathode heating-medium flow path 8 are joined together in front of the reforming equipment, and heating media are heated by exhaust heat derived from the reforming equipment. Then, the thus-heated heating media are branched into the anode heating-medium flow path 6 and the cathode heating medium flowpath 8 and supplied to the anode buffer mechanism reserve section 29 and the cathode buffer mechanism reserve section 39.

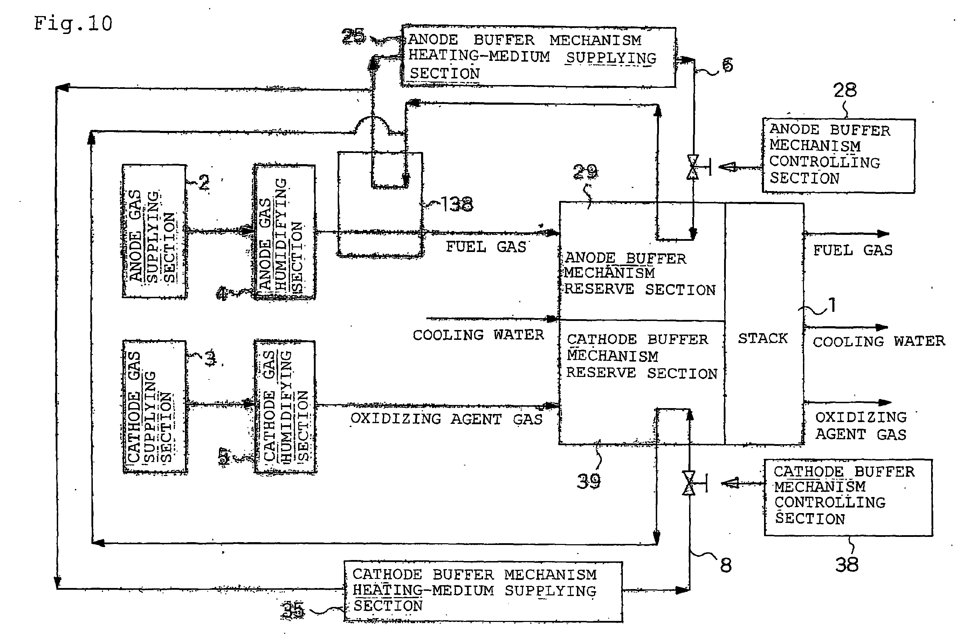

The alternative (2) is a method in which heat from the humidification hydrogen gas supplied from the fuel reforming equipment of the anode gas supplying section 2 to the stack 1 is used as a heat source, and conducted into the anode heating-medium flow path 6 and the cathode heating-medium flow path 8. Fig. 10 is a schematic view of the fuel cell system of the third embodiment (2). As shown in Fig. 10, the heat exchanger 138 is provided in the flow path of humidified fuel gas. Provided are the anode heating-medium flow path 6 and the cathode heating-medium flow path 8 leading to the heat exchanger 138. Further, the anode heating-medium flow path 6 and the cathode heating-medium flow path 8 are joined together in front of the heat exchanger 138, and the heating media is heated through heat transfer from the humidified fuel gas of the heat exchanger 138. Then, the thus-heated heating media are branched into the anode heating-medium flow path 6 and the cathode heating-medium flow path 8 and supplied to the anode buffer mechanism reserve section 29 and the cathode buffer mechanism reserve section 39.

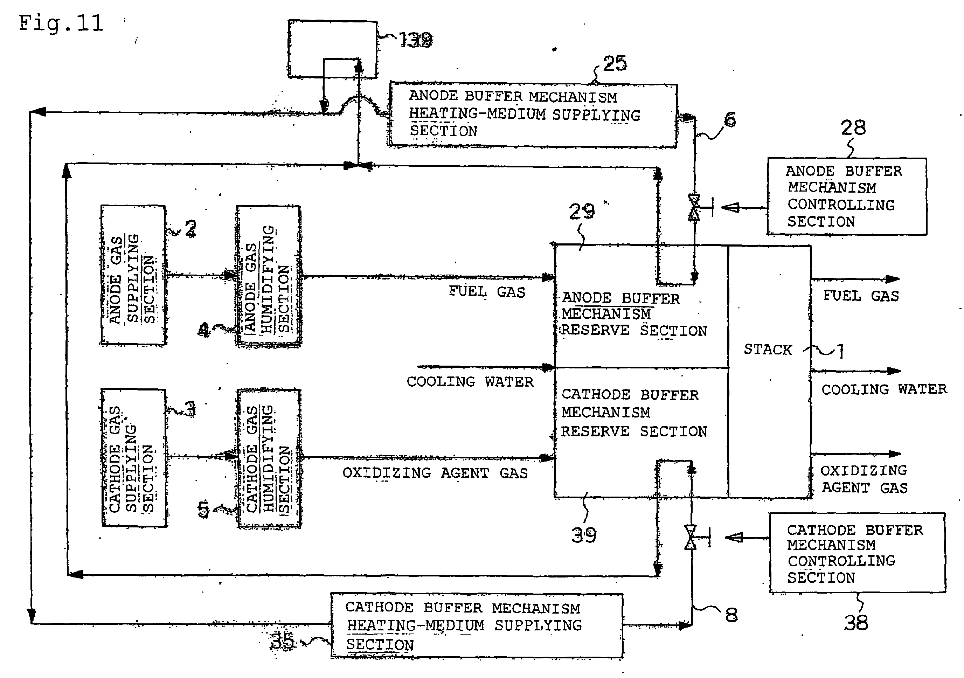

The alternative (3) is a method in which other fuels are burnt for heating the heating media guided to the heating-medium flow path. Fig. 11 is a schematic view of the fuel cell system of the third embodiment (3). As shown in Fig. 11, the fuel cell system (3) is different from the above (2) in that the heat exchanger 138 is not provided but the heating section 139 is provided for heating the heatingmediabycombustionofotherfuels. Thethus-heated heating media by the heating section 139 are supplied to the anode buffer mechanism reserve section 29 and the cathode buffer mechanism reserve section 39, as the above fuel cell system (2).

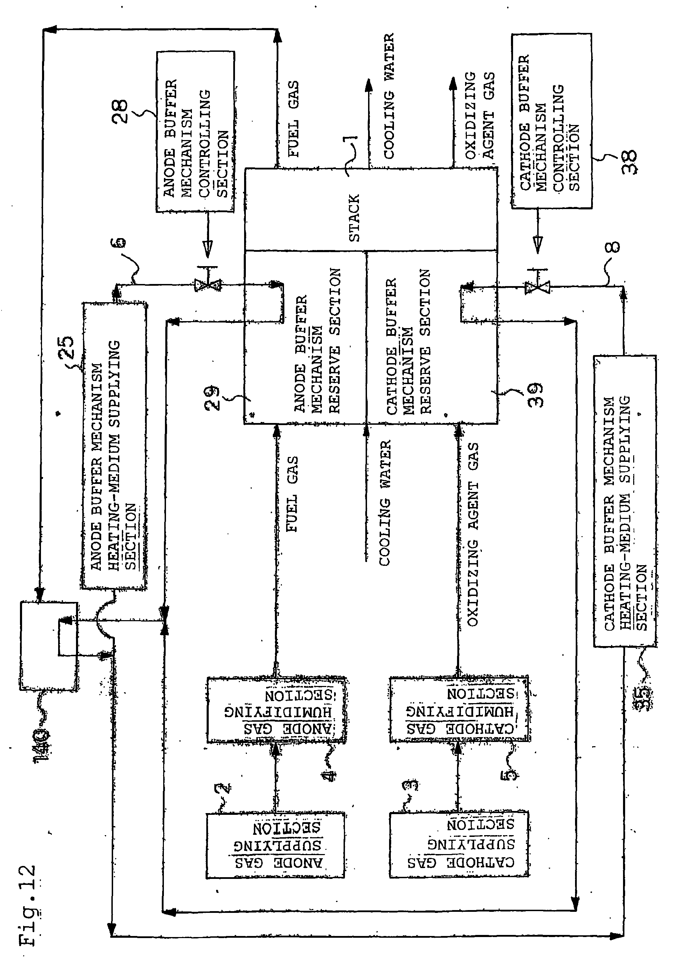

The alternative (4) is a method in which redundant fuel gas at the anode side is burnt to heat the heating media conducted into the heating medium flow path. Fig. 12 is a schematic view of the fuel cell system of the third embodiment (4). As shown in Fig. 12, the fuel cell system (4) is different from the above (3) in that the heating section 139 is not provided but the fuel gas combustion heating section 140 is provided for heating the heating media by combustion of redundant fuel gas. This fuel cell system is provided with a flow path for supplying redundant fuel gas not used in the stack 1 to the fuel gas combustion heating section 140, and redundant fuel gas is burnt at the fuel gas combustion heating section 140 to heat the heating media.

For guiding the above alternatives (3) and (4), a dedicated burner may be provided for combustion of raw fuels or off-gas, or a reforming equipment burner driven by raw fuels or off-gas may be used to act as the dedicated burner. To be specific, the purpose can be achieved, for example, by designing the fuel cell in such a way that exhaust gas burnt by the reforming equipment is constantly conducted into the buffer mechanism, and when the dew point is insufficient, controls so that a combustion amount necessary for additional humidification in addition to the burnt amount necessary for normal reforming reaction, are applied to the reforming equipment burner is conducted, thereby achieving the purpose.

Heat from these heat sources is subjected to heat exchange with cooling water discharged from the stack 1 and conducted into the buffer mechanism, or directly conducted into the buffer mechanism. An example where the heat from the above heat sources is subjected to heat exchange with cooling water discharged from the stack 1 and then conducted into the buffer mechanism, and an example where the heat from the above heat sources is directly conducted into the buffer mechanism are described.

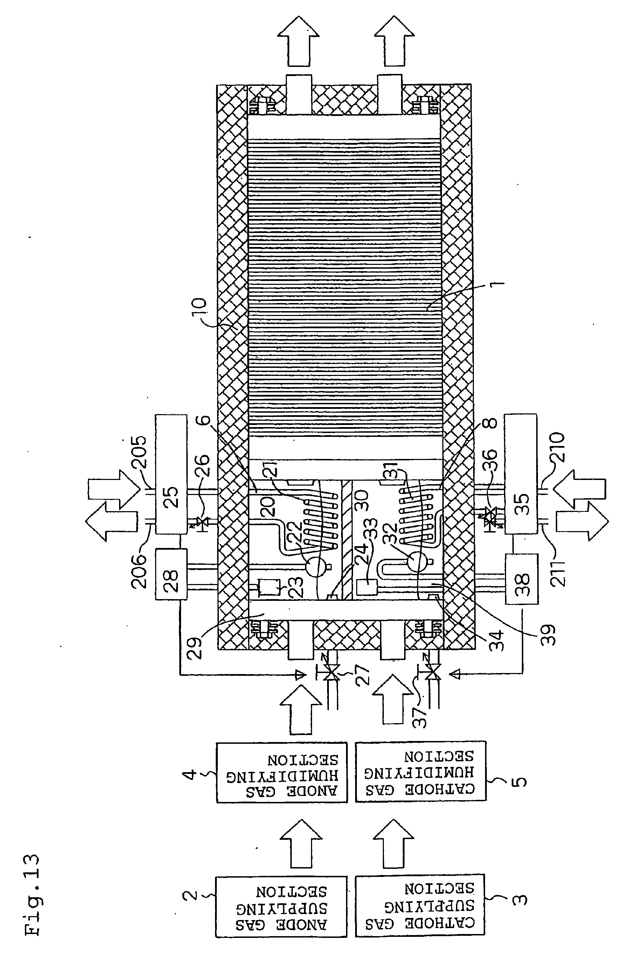

Fig. 13 is a schematic view of the fuel cell system of the third embodiment, or a view illustrating in more detail the anode buffer mechanism heating medium supplying section 25 and the cathode buffer mechanism heating-medium supplying section 35 shown in Fig. 1 in the fuel cell system of the first embodiment. Fig. 13 shows an example where the heat from the above heat sources is directly guided into the buffer mechanism. The same numbers are given to the same parts shown in Fig. 13 as those shown in Fig. 1, and description thereof is omitted.

In Fig. 13, heating media carrying heat from the above heat sources of (1) to (4) are guided into the anode buffer mechanism heating-medium supplying section 25 through the heating medium guiding pipe 205. Then, the anode buffer mechanism heating-medium supplying section 25 supplies the thus-guided heating media directly to the anode buffer mechanism heat-exchange section 21 through the anode heating medium flow path 6. Heating media subjected to heat exchange with the anode reserved water at the anode buffer mechanism heat-exchange section 21 return through the anode heating medium flow path 6 to the anode buffer mechanism heating-medium supplying section 25, and are discharged from the anode buffer mechanism heating-medium supplying section 25 through heating medium discharge pipe 206.

Similarly, in Fig. 13, heating media carrying heat from the above heat sources of (1) to (4) are guided into the cathode buffer mechanism heating-medium supplying section 35 through the heating medium guiding pipe 210. Then,the cathode buffer mechanism heating-mediumsupplying section 35 supplies the thus-guided heating media directly to the cathode buffer mechanism heat-exchange section 31 through the cathode heating-medium flow path 8. Heating media subj ected to heat exchange with cathode reserved water at the cathode buffer mechanism heat-exchange section 31 return through the cathode heating medium flow path 8 to the cathode buffer mechanism heating-medium supplying section 35, and are discharged from the cathode buffer mechanism heating-medium supplying section 35 through the heating medium discharge pipe 211.

As explained above, in the fuel cell system illustrated in Fig. 13, heating media carrying heat from the above heat sources of (1) to (4) are directly guided into the cathode buffer mechanism heat-exchange section 31 and the cathode buffer mechanism heat-exchange section 21.

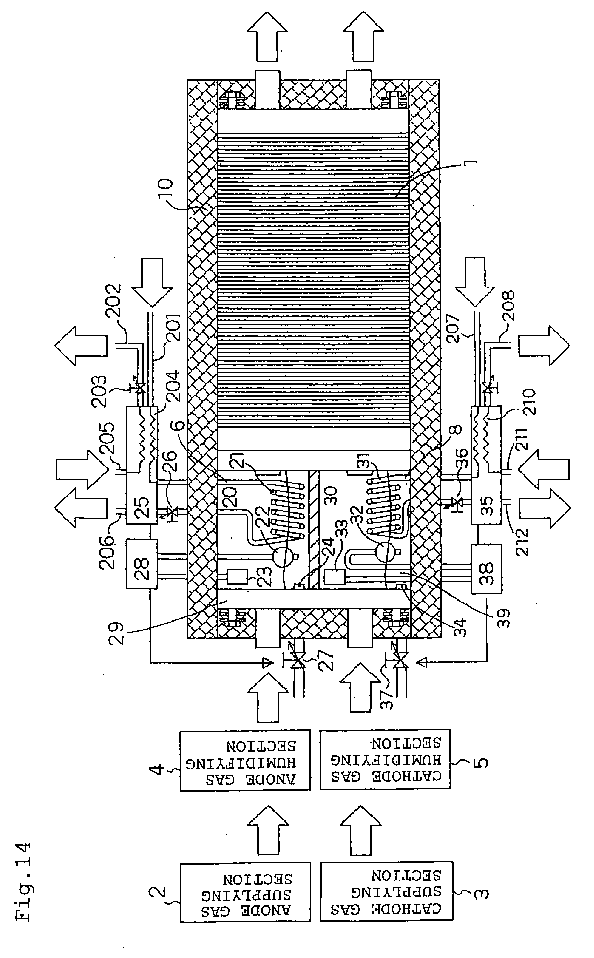

Fig. 14 is a schematic view of the fuel cell system of the third embodiment, or a view illustrating in more detail the anode buffer mechanism heating-medium supplying section 25 and the cathode buffer mechanism heating-medium supplying section 35 shown in Fig. 1 in the fuel cell system of the first embodiment. Fig. 14 shows an example where the heat from the above heat sources is subjected to heat exchange with cooling water discharged from the stack 1 and guided into the buffer mechanism. Further, the same numbers are given to the same parts shown in Fig. 14 as those shown in Fig. 1, and description thereof is omitted.

In Fig. 14, cooling water discharged from the stack 1 is guided into the anode buffer mechanism heating-medium supplying section 25 through the cooling water guiding pipe 201, and heating media carrying heat from the above heat sources are also guided thereinto through the heating-medium guiding pipe 205. Then, the thus-guided cooling water from the stack 1 is subj ected to heat exchange with the thus-guided heating media at the heat exchanger 204 of the anode buffer mechanism heating-medium supplying section 25, thereby the cooling water from the stack 1 is increased in temperature. The anode buffer mechanism heating medium supplying section 25 supplies the thus-temperature-increased cooling water at the heat exchanger 204 to the anode buffer mechanism heat-exchange section 21 through the anode heating-medium flow path 6. The cooling water from the stack 1 subj ected to heat exchange with the anode buffer reserved water at the anode buffer mechanism heat-exchange section 21 returns through the anode heating-medium flow path 6 to the anode buffer mechanism heating-medium supplying section 25, and is then discharged from the anode buffer mechanism heating-medium supplying section 25 through the cooling water discharge pipe 206. Heating media subjected to heat exchange at the heat exchanger 204 are discharged from the heating-medium discharge pipe 202 through the heating-medium amount adjusting valve 203.

Similarly, in Fig. 14, the cooling water from stack 1 is guided into the cathode buffer mechanism heating medium supplying section 35 through the cooling water guiding pipe 207, and heating media carrying heat from the above heat sources are also guided thereinto through the heating-medium guiding pipe 211. Then, the thus-guided cooling water from the stack 1 is subjected to heat exchange with the thus-guided heating media at the heat exchanger 210 of the cathode buffer mechanism heating-medium supplying section 35, thereby the cooling water from the stack 1 is increased in temperature. The cathode buffer mechanism heating-medium supplying section 35 supplies cooling water increased in temperature at the heat exchanger 204 to the cathode buffer mechanism heat-exchange section 31 through the cathode heating-medium flow path 8. The cooling water from the stack 1 subjected to heat exchange with the cathode buffer reserved water at the cathode buffer mechanism heat-exchange section 31 returns through the cathode heating-medium flow path 8 to the cathode buffer mechanism heating-medium supplying section 35, and is then dischargedfromthecathodebuffermechanismheating-medium supplying section 35 through the cooling water discharge pipe 212. Heating media subjected to heat exchange at the heat exchanger 210 are discharged from the heating medium discharge pipe 208 through the heating-medium amount adjusting valve 209.

As explained above, in the fuel cell system of Fig. 14, the heat from the above heat sources of (1) to (4) is conducted indirectly into the anode buffer mechanism heat-exchange section 21 and the cathode buffer mechanism heat-exchange section 31, namely by heat exchange of the heating media carrying said heat with the cooling water from the stack 1.

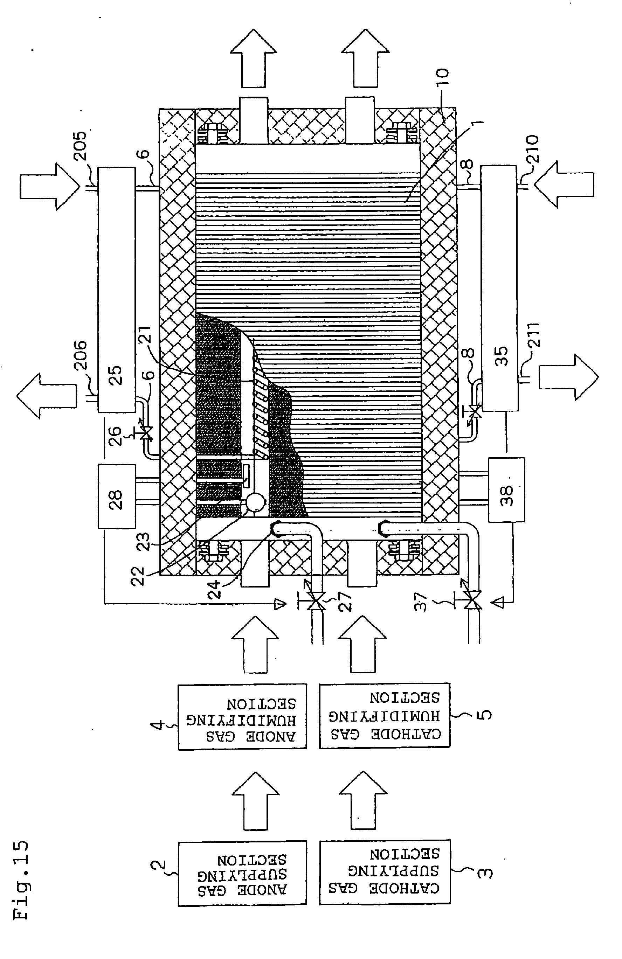

Fig. 15 is a schematic view of the fuel cell system of the third embodiment, which corresponds to the fuel cell system of the second embodiment, or a view illustrating in more detail the anode buffer mechanism heating-medium supplying section 25 and the cathode buffer mechanism heating-medium supplying section 35 shown in Fig. 7. Fig. 15 shows an example where the heat from the above heat sources is directly guided into the buffer mechanism. The same numbers are given to the same parts shown in Fig. 15 as those shown in Fig. 7, and description thereof is omitted.

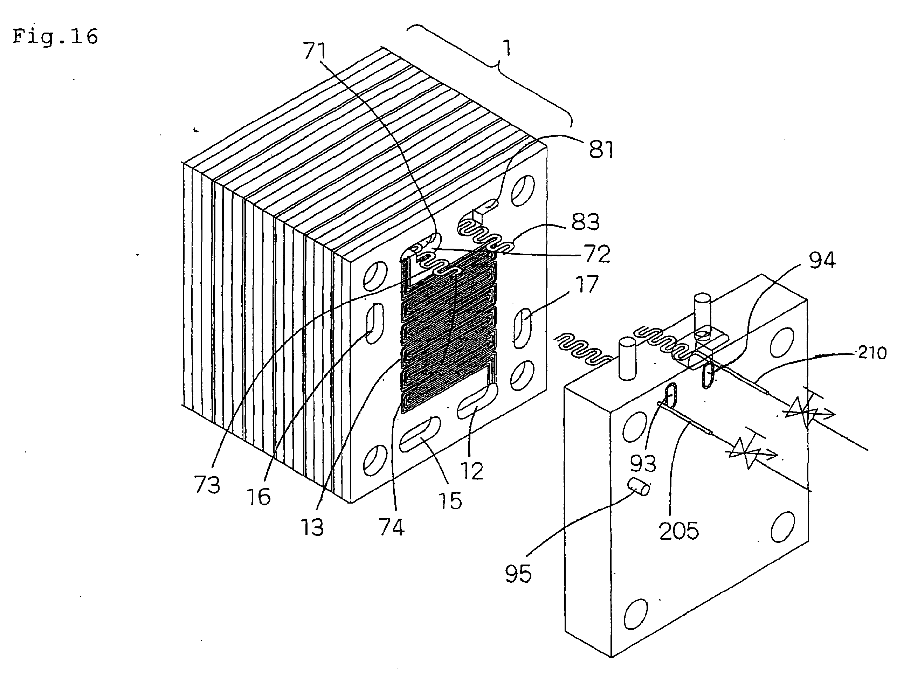

Fig. 16 is a constructional perspective view of the stack 1 of the fuel cell system shown in Fig. 15. The fuel cell system of the second embodiment is provided with the external heat exchanger 98 and the branching valve 97 as shown in Fig. 8(a). The fuel cell system of Fig. 15 is provided with the heating-medium guiding pipe 205 and the heating-medium guiding pipe 210 in place of the external heat exchanger 98 and the branching valve 97, as shown in Fig. 16. Fig. 16 is the same as Fig. 8 (a) in the remaining details.

In Fig. 15, heating media carrying heat from the above heat sources of (1) to (4) are guided into the anode buffer mechanism heating-medium supplying section 25 through the heating medium guiding pipe 205. Then, the anode buffer mechanism heating-medium supplying section 25 supplies directly the thus-guided heating media to the anode buffer mechanism heat-exchange section 21 through the anode heating-medium flow path 6. Heating media subjected to heat exchange with the anode buffer reserved water at the anode buffer mechanism heat-exchange section 21 return through the anode heating-medium flow path 6 to the anode buffer mechanism heating-medium supplying section 25, and are discharged from the anode buffer mechanism heating-medium supplying section 25 through the heating medium discharge pipe 206.

Similarly, in Fig. 15, heating media carrying heat from the above heat sources of (1) to (4) are guided into the cathode buffer mechanism heating-medium supplying section 35 through the heating medium guiding pipe 210. Then, the cathode buffer mechanism heating-mediumsupplying section 35 directly supplies the thus-guided heating media to the cathode buffer mechanism heat-exchange section through the cathode heating medium flow path 8. Heating media subjected to heat exchange with the cathode reserved water at the cathode buffer mechanism heat-exchange section return'through the cathode heating medium flow path 8 to the cathode buffer mechanism heating-medium supplying section 35, and are discharged from the cathode buffer mechanism heating-medium supplying section 35 through the heating-medium discharge pipe 211.

As explained above, in the fuel cell system of Fig. 15, heating media carrying heat from the above heat sources of (1) to (4) are directly conducted to the cathode buffer mechanism heat-exchange section and the anode buffer mechanism heat-exchange section 21.

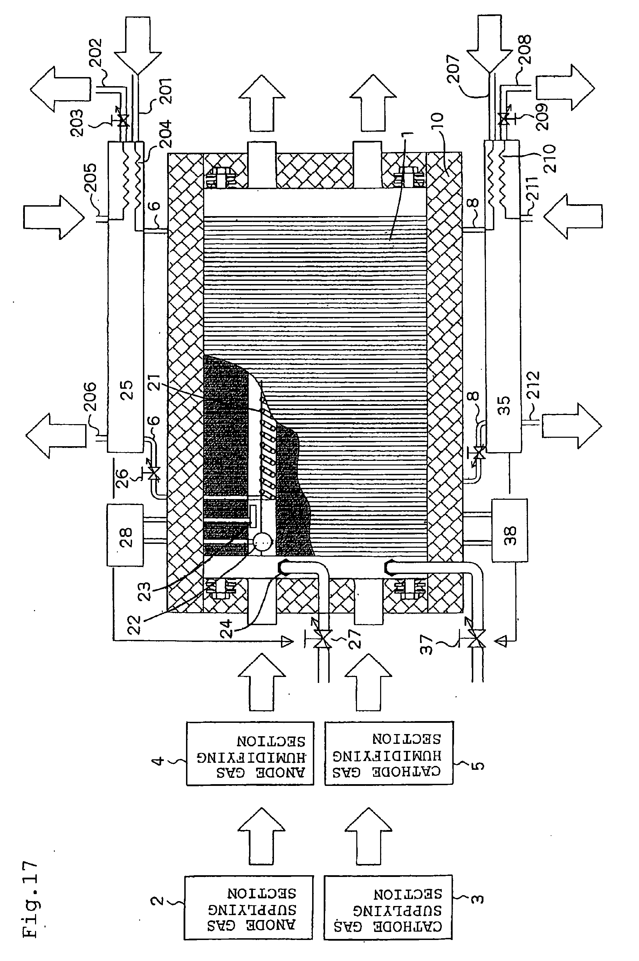

Fig. 17 shows the fuel cell system of the second embodiment, or a view illustrating in more detail the anode buffer mechanism heating-medium supplying section 25 and the cathode buffer mechanism heating-medium supplying section 35 shown in Fig. 7. Fig. 17 shows an example where the heat from the above heat sources is subjected to heat exchange with the cooling water discharged from the stack 1 and then guided into the buffer mechanism. The same numbers are given to the parts shown in Fig. 17 same as those shown in Fig. 7, and description thereof is omitted.

In Fig. 17, the heat exchanger 204 of the anode buffer mechanism heating-medium supplying section 25 and the heat exchanger 210 of the cathode buffer mechanism heating-medium supplying section 35 correspond to the external heat exchanger 98 shown in Fig. 8(a).

In Fig. 17, the cooling water from the stack 1 is guided into the anode buffer mechanism heating-medium supplying section 25 through the cooling water guiding pipe 201, and heating media carrying heat from the above heat sources are also conducted thereinto through the heating-medium guiding pipe 205. Then, the thus-guided cooling water from stack 1 is subjected to heat exchange with the thus-guided heating media at the heat exchanger 204 of the anode buffer mechanism heating-medium supplying section 25, thereby the cooling water from the stack 1 is increased in temperature. The anode buffer mechanism heating-medium supplying section 25 supplies cooling water increased in temperature at the heat exchanger 204 to the anode buffer mechanism heat-exchange section 21 through the anode heating-medium flow path 6. The cooling water from the stack 1 subjected to heat exchange with the anode buffer reserved water at the anode buffer mechanism heat-exchange section 21 returns through the anode heating-medium flow path 6 to the anode buffer mechanism heating-medium supplying section 25, and is then discharged from the anode buffer mechanism heating-medium supplying section 25 through the cooling water discharge pipe 206. Heating media subjected to heat exchange at the heat exchanger 204 are discharged from the heating medium discharge pipe 202 through the heating-medium amount adjusting valve 203.

Similarly, in Fig. 17, the cooling water from the stack 1 is guided into the cathode buffer mechanism heating-medium supplying section 35 through the cooling water guiding pipe 207, and heating media carrying heat from the above heating sources are also conducted thereinto through the heating-medium guiding pipe 211. Then, the thus-guided cooling water from stack 1 is subjected to heat exchange with the thus-guided heating media at the heat exchanger 210 of the cathode buffer mechanism heating-medium supplying section 35, thereby the cooling water from the stack 1 is increased in temperature. The cathode buffer mechanism heating-medium supplying section 35 supplies the cooling water increased in temperature at the heat exchanger 210 to the cathode buffer mechanism heat-exchange section through the cathode heating-medium flow path 8. The cooling water from the stack 1 subjected to heat exchange with the cathode buffer reserved water at the cathode buffer mechanismheat-exchange section returns through the cathode heating-medium flow path 8 to the cathode buffer mechanism heating-medium supplying section 35, and is then discharged from the cathode buffer mechanism heating-medium supplying section 35 through the cooling water discharge pipe 212. Heating media subjected to heat exchange at the heat exchanger 210 are discharged from the heating-medium discharge pipe 208 through the heating-medium amount adjusting valve 209.

As explained above, in the fuel cell system of Fig. 17, the heat from the above heat sources of (1) to (4) is conducted indirectly into the anode buffer mechanism heat-exchange section 21 and the cathode buffer mechanism heat-exchange section, namely by heat exchange of the heating media carrying said heat with the cooling water from the stack 1.

An example where the heat from the above sources was subjected to heat exchange with cooling water discharged from the stack 1 and guided into the buffer mechanism and an example where the heat from the above heat sources was directly conducted into the buffer mechanism are described.

Further, means according to the first to third embodiments are, not limited thereto, as long as the function is the same.

### [Example]

A specific explanation will be made hereinafter for the fuel cell systems of the first to third embodiments by referring to examples. The present invention shall not be, however, interpreted to be limited to these examples.

### (Example 1)

The fuel cell system described in the first embodiment was used in the example 1. The buffering section separators 50 and 60 illustrated in Fig. 4 covering the fuel cell system of the example 1 were used by laminating them in an appropriate number according to an amount of water required by the stack. The appropriate number was based on a volume of water that could be supplied from reserved water for 15 minutes consecutively for covering the shortage caused by reduction in the reserved water level, namely, from the rated level to 70% of the rated level of water vapor content supplied from the gas humidification system as shown in the experiment performed by the applicant of the invention for verifying the operation of the fuel cell system. However, it is not always necessary to abide by the appropriate number, or the invention shall not be limited to thereto.

Further, the reserved water level was monitored by the optical level sensor 63 through the observation hole 62 provided on the end plate 51, and each time when the rated level was attained, the anode buffer mechanism drain valve 27 was opened for a certain time to discharge the water through the anode buffer mechanism drain port 24 connected with the level gauge of the end plate 51, thereby allowing the water to be used in activating the reforming equipment of the fuel gas supplying section 2. The water was used also for activating the reforming equipment on the cathode side.

The buffer mechanism separators 50 and 61 were made from glassy carbons (Tokai Carbon Co., Ltd.) in the same manner as the stack separators 40 and 41. Although omitted in the drawing, stack electromotive force was applied to the electricity collecting plate insulated through the insulating plate from'the end plate.

The stack 1 was basically specified to be 200cm² in the electrode area, 0.2A/cm² in current density and 45 in the number of laminations. It was operated under the condition that the fuel utilization factor (Uf) was 75% and air utilization factor (Uo) was 50%, and the initial voltage for operation was approximately 0.74V and the rated output was 1.32kw. The rated operation required approximately 20LM of SRG (CO₂ concentration of 23%) and 53LM of air on a dry solid basis for actuation. The flow path of the stack was specified to be completely parallel, the coolingwater flowpath was provided approximately along the reaction gas flow path, and the rated cooling water amount was 1.8L/minute. When the cooling water was fed to the stack at 60°C the water discharged from the stack was at approximately 69°C.

The reforming equipment was operated under the condition that the reforming section was at 630°C and S/C (steam/carbon ratio) was 3.0. The observed value of the gas dew point was 63°C±2°C at the rated operation and sometimes exceeded 70°C at actuation and load fluctuation due to excessive evaporation of inner reserved water. Therefore, this fuel supply system does not need additional humidification of anode gas or the anode gas humidifier was not provided in particular. Air supplied from a blower was used as cathode gas. More particularly, the air was used after it was humidified to a dew point of 57°C through total heat exchange with off-air by using a total heat exchanger (Nafion 112 (DuPont) was used as a humidification membrane) with a total membrane area of 5000cm² and then humidified to a dew point of 63°C by using a membrane humidifier with a total membrane area of 1000cm² which used stack cooling water as a water source and a heating source. Dew points of these anode gas and cathode gas were monitored by the anode gas dew point meter and the cathode gas dew point meter, and the controlling fixed point was set to be 62°C.

The buffering section was laminated in series with the stack and then insulated en bloc. Where no additional heat supply was provided, it was kept at temperatures similar to those of the stack due to heat released from the stack. Exhaust gas from the reforming equipment burner was directly used as a heating medium necessary for additional humidification. The reforming equipment burner used, in principle, humidity-eliminated off-gas as a fuel, for which city gas (13A) was used as an auxiliary fuel. Raw fuel (13A) was consumed at approximately 4LM under the rated drive, and at this time a self-sustained operation was possible without any major problems by using off-gas (approximately 3LM of hydrogen). Accidental combustion of the reforming equipment burner was controlled by referring to reformed programs in which sub-programs capable of controlling the combustion amount through feedback of signals obtained from the anode gas dew point meter and the cathode dew point meter in the buffer mechanism were incorporated into optimal combustion controlling programs of the reforming reaction itself. Consequently, where the dew point of reaction gas was reduced in relation to the controlling fixed point, an auxiliary fuel of 13A was increased, thereby making it possible to directly increase the exhaust heat from the burner.

Under the above rated operational conditions, additional humidification was needed by 0.25g/min at the anode side and by 0.65g/min at the cathode side for every one degree decrease in the supply dew point from 62°C, which is the fixed point. The vaporization latent heat (approximately 0.55kcal/g at the temperature concerned) was multiplied to give the respective heat amounts of 0.14kcal/miin and 0.35kcal/min. Since a combustion heat amount of 13A was 11000 kcal/m³ at the anode side, it was calculated that the raw fuel flow rate necessary for elevating the supply gas dew point by one degree was (0.14/11000)* 1000 = 0.0127 LM = 13ccm at the anode side and (0.35/11000) * 1000 = 0.0318LM = 32ccm at the cathode side, or approximately 1% of the rated raw fuel consumption in total.

In the fuel cell humidification system having the above mechanism, an amount of stack cooling water is increased, thereby lowering the temperature of water discharged from the stack to decrease an amount of water vapor supplied from the cathode hot-water humidifier at any time as appropriate. Where this method was used to lower the dew point supplied from the cathode hot-water humidifier to 60°C (in this instance, the cooling water discharged from the stack in an amount of 2.6LM was 66.5°C) , the above control mechanism developed the dew point, which was 2 degrees lower than the fixed point. At this time, an increased amount of raw fuel was actually measured to be 130ccm, which was approximately two times greater than the above calculation (32*2 = 64CCM). To be specific, an increased amount of raw fuel was primarily used in reforming reactions to increase an amount of hydrogen supplied. In the stack subj ected to constant current control, the increased amount was consumed to give off-gas, which was finally burnt at the burner, and the exhaust gas therefrom was conducted into the above buffer mechanism section and used as an additional heat source. The heat efficiency associated with additional humidification was calculated to be approximately 50%, when included were the heat loss occurring in the reforming process (approximately 80%), heat release on piping and heat conduction loss occurring in the buffer mechanism. As explained so far, it was possible to compensate a several-degree decrease in the supply gas dew point by using auxiliary combustion corresponding to several percentages to 10 percentages of the rated raw fuel consumption.

Further, in the above mechanism, the time constant from additional combustion of raw fuel to dew point increase in supply gas was approximately 2.5 minutes, unless special control was provided. Where the above-described sub-programs were rewritten by adding PID setting and PID self-determine sub-routine, the time was shortened to one minute, thereby making it possible to provide a quicker compensation of the dew point.

A comparative operation test was conducted between the conventional fuel cell system having the mechanism shown in Fig. 6 and the fuel cell system of the example 1 having the mechanism shown in Fig. 1 and also having the buffer mechanism shown in Fig. 3.

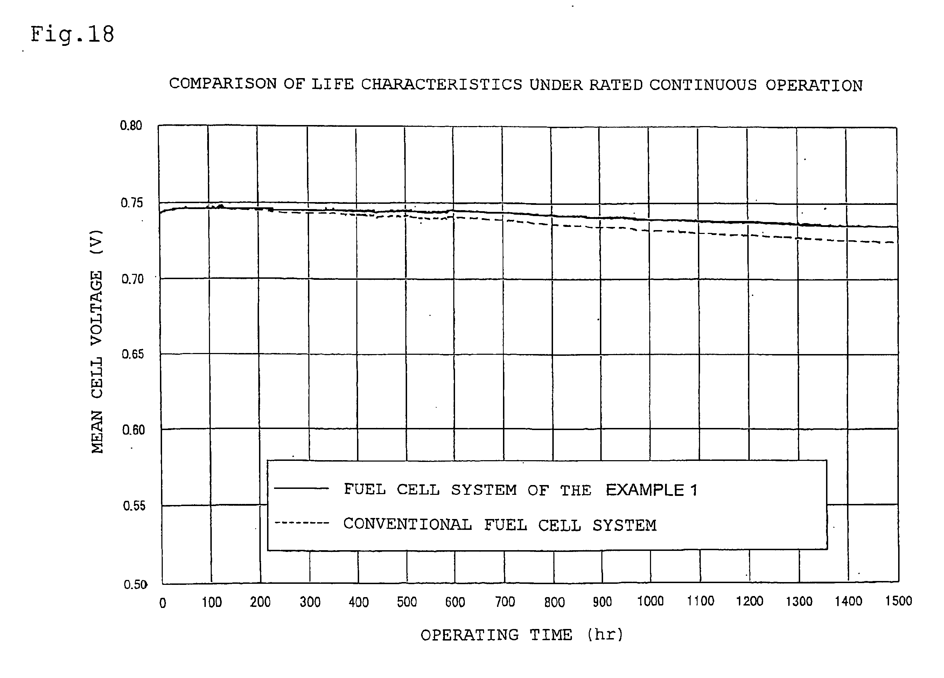

Fig. 18 shows the comparison of stack life characteristics under the rated operation (change in cell mean voltage). The comparative operation test revealed that the fuel cell system of the example 1 was longer in life than the conventional fuel cell system of the applicant of the present application. The reason was assumed as follows, as explained previously, the fuel cell system of the first embodiment was effectively designed in such a way that the reaction gas which the reaction gas which formed dew inside a pipe and decreased in an actual water vapor content was returned to a dew point higher than the cell temperature at a distance not giving to the stack 1 a pipe length which might develop dew, thereby actually preventing drying of the MEA42 and the buffering effect was imparted to the stack 1 in a situation where the capacity of a total heat exchanger was decreased due to environmental factors (humidification capacity of the total heat exchanger was dependent on ambient temperatures and decreased with increasing temperatures inside the system, namely the exchanger had ambient-temperature dependency).

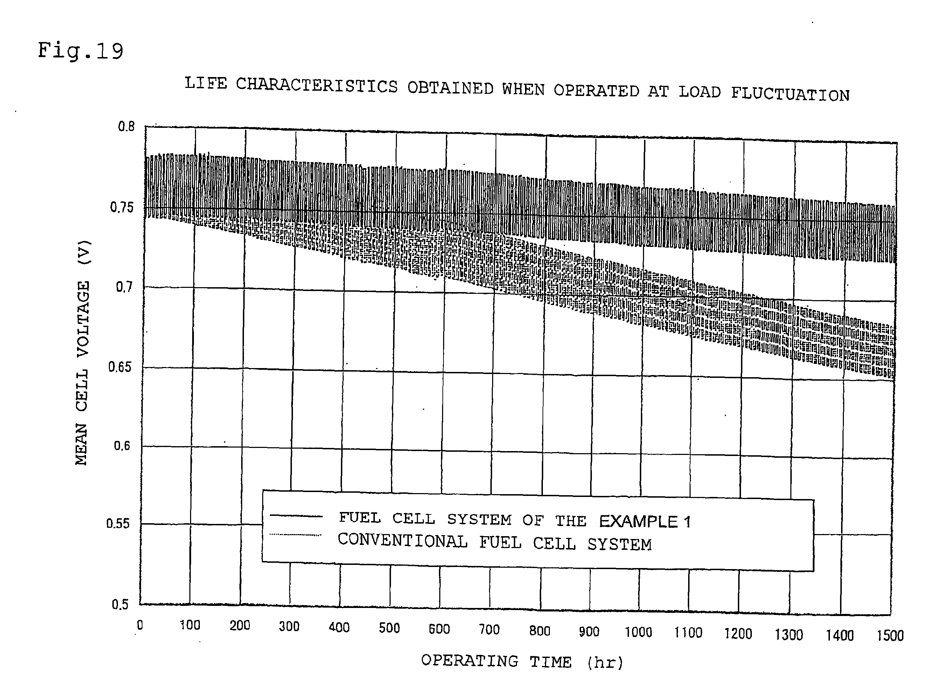

Fig. 19 also shows the life characteristics obtained from the load fluctuation endurance test based on 8 hours per cycle where both of the fuel cell systems were repeatedly subj ected to the 4-hour rated operation at a current density of 0.2A/cm² and the 4-hour reacted operation at 0.1A/cm² (TDR = turn down ratio of 50%). As is apparent from the explanation above, a greater difference in endurance was found between them than that obtained from the rated life test.

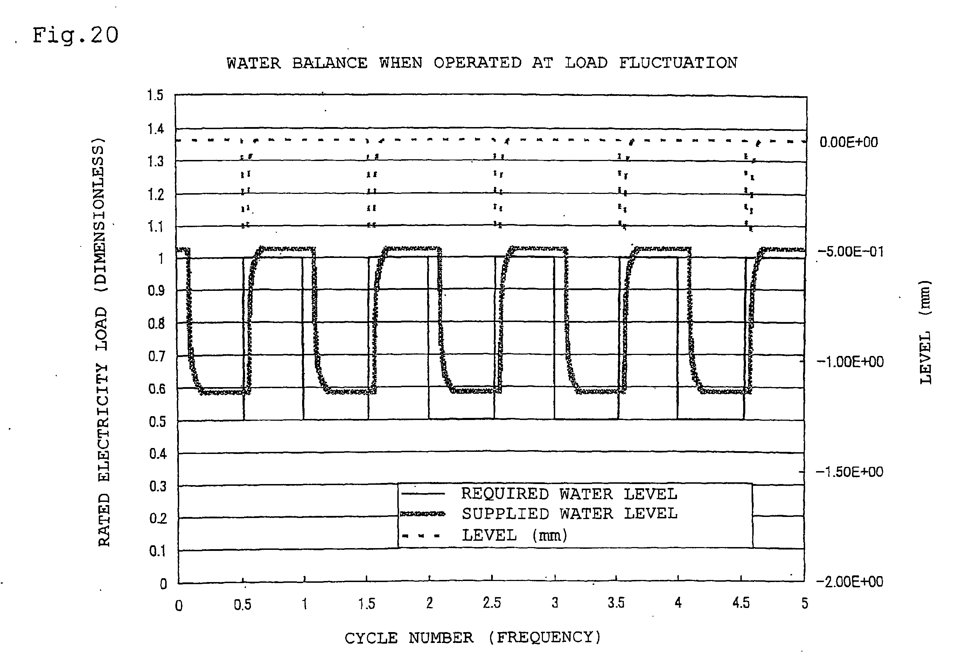

In order to evaluate this phenomenon, a total amount of the water vapor supplied from the anode gas humidifying section 4 (observed value by the dew point measurement) and a level of water reserved at the anode buffer mechanism reserve section 29 were actuallymeasured to plot the results, together with a total amount of water required by the stack (calculation values obtained from cell reaction formula). The results were shown in Fig. 20.

This plot reveals that in a situation where the load increased, the cell instantly requires water according to the load, however, the reforming equipment takes time in reaching thermal equilibrium, and the water supply did not consequently catch up with the amount required by the cell. Thus, it is apparent that in the conventional fuel cell system without the buffer mechanism, the stack was operated in a dry state during the above time. In contrast, it is apparent by referring to the water level that in the cell having the buffer mechanism, a necessary amount of water is supplied to the stack from the reserved water during the above time. It was understood that a difference in life characteristics at load fluctuation between these fuel cell systems was derived from accumulation of life deterioration under the drying operation when the load was increased.

### (Example 2)

The fuel cell system described in the second embodiment was used in the example 2. An explanation will be made hereinafter for operational conditions of the fuel cell system of the example 2 described below.

The rated operation was conducted under the condition that the current density was 0.2A/cm² of MEA, the fuel utilization factor (Uf) was 75% and the air utilization factor (Uo) was 40%. The cooling water entering into the stack 1 was controlled at 70°C, the temperature inside the branching valve 97 at a site where cooling water was discharged form the stack 1 was monitored, and the flow rate was controlled so that said temperature was at 75°C. In this instance, the flow rate was approximately 3.5 liters for 1kw of the stack output.

The branching valve 97 acts to control an amount of cooling water entering into the anode heating medium flow path 74 and the cathode heating medium flow path 84 so that the reserved water can be kept at a constant temperature. In the experiment of the example 2, the reserved water was controlled by the anode buffer mechanism controlling section 28 and the cathode buffer mechanism controlling section 38 to be kept at 72°C. The heating-medium flow paths 74 and 84 wereprovidedwith the external heat exchanger 97, thereby heat obtained from heat sources other than the stack was supplemented when the cooling water was insufficient in temperature. The reserved water was successfully kept at 72°C without using the external heat exchanger under the rated operation.

The heating-medium flow path on the anode side 74 and the heating-medium flow path on the cathode side 84 were constituted by a SUS 316L pipe covered by a PFA tube (6.35mm in outer diameter and 1mm in thickness) which was subj ected to thermal contraction and then bent. Since a fuel cell is particularly vulnerable to heavy-metal contamination' and the material of this area is used at a reducing atmosphere particularly at the anode side, special attention must be given to metal piping, as explained above.

The fuel cell systems of the example 1 and example 2 were assembled with the following three different numbers of laminations and subjected to the rated endurance test. 50-layer lamination (300mm in stack length, 1.3kw in rating) 100-layer lamination (600mm in stack length, 2.6kw in rating)
200-layer lamination (1200mm in stack length, 5.2kw in rating)

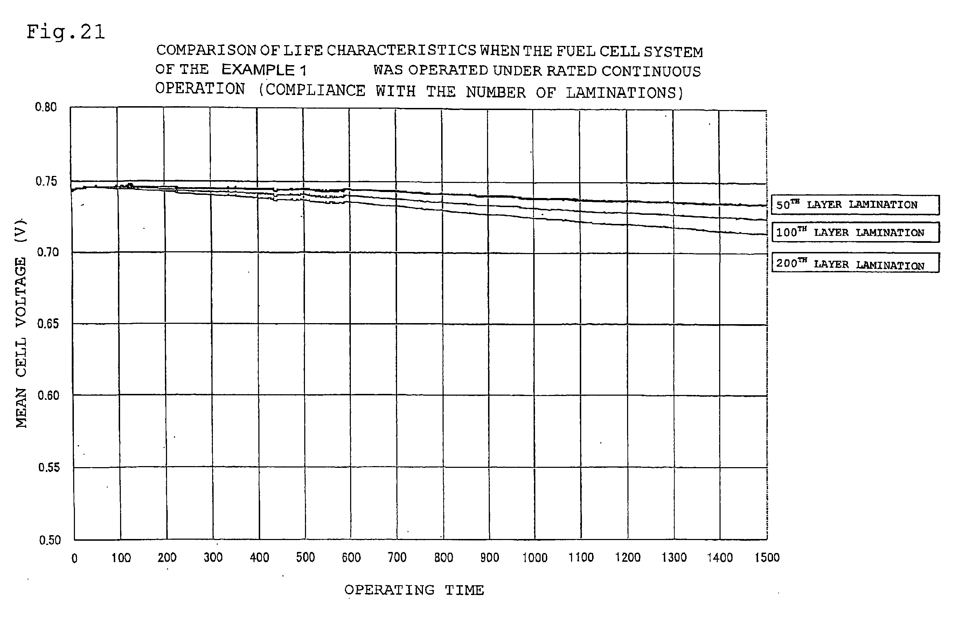

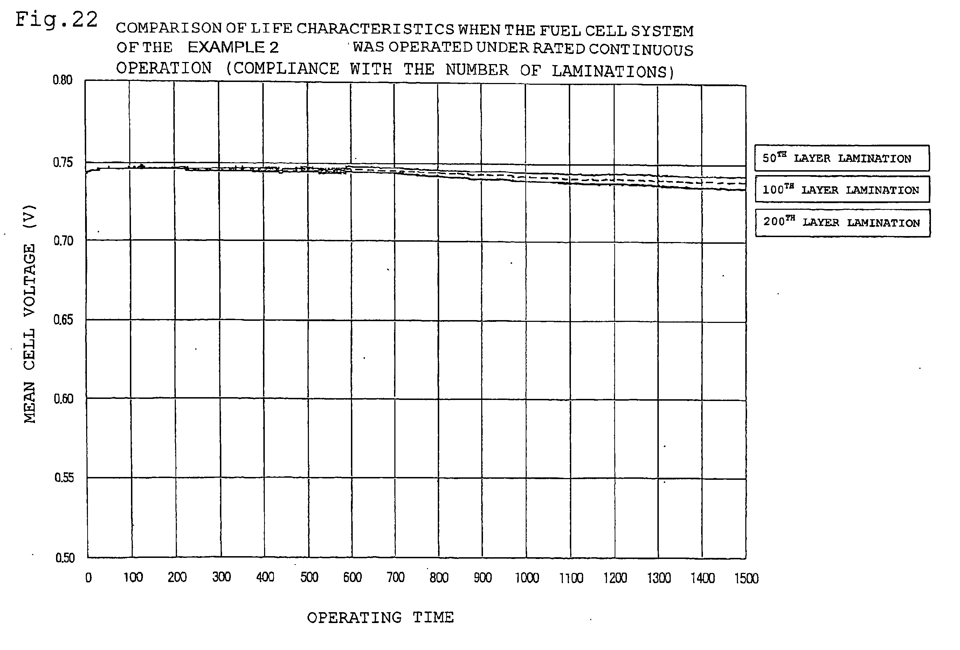

Fig. 21 shows the results of the test for the example 1, and Fig. 22 shows the results of the test for the example 2. As apparent from these results, results obtained from the second embodiment were more preferable than those of the first embodiment, particularly when the stack length was lengthened.

In order to verify the reason, the stack having 200-layer laminations was disassembled after a 1500-hour operation, and unit cells of the 1^{st}, 50^{th}, 100^{th}, 150^{th}, and 200^{th} layer laminations counted from the buffering sections 20 and 30 (counted from the end plate 90 in the second embodiment) (in the stack of the applicant of the present application, a single-layer lamination cell (single cell) were used as a sub-assembly, which was laminated to give a fuel cell, and the fuel cell couldbe arbitrarily exchanged, replaced or re-activated after use were checked for the voltage under the above rated operation). Table 2 shows the results.

**[Table 2]**

| | First embodiment | Second embodiment |
|---|---|---|
| 1^{st} layer lamination | 735mV | 731mV |
| 50^{th} layer lamination | 733mV | 739mV |
| 100^{th} layer lamination | 718mV | 727mV |
| 150^{th} layer lamination | 712mV | 729mV |
| 200^{th} layer lamination | 703mV | 735mV |

As apparent from the results, cells of the example 1 were deteriorated to a greater extent at a larger number of laminations, whereas those of the example 2 didnot exhibit a clear tendency of such deterioration but underwent less deterioration than those of the example 1. This finding was considered to be related to the distance from the water vapor supplying section, and the example 2 was improved in distance, as compared with example 1.

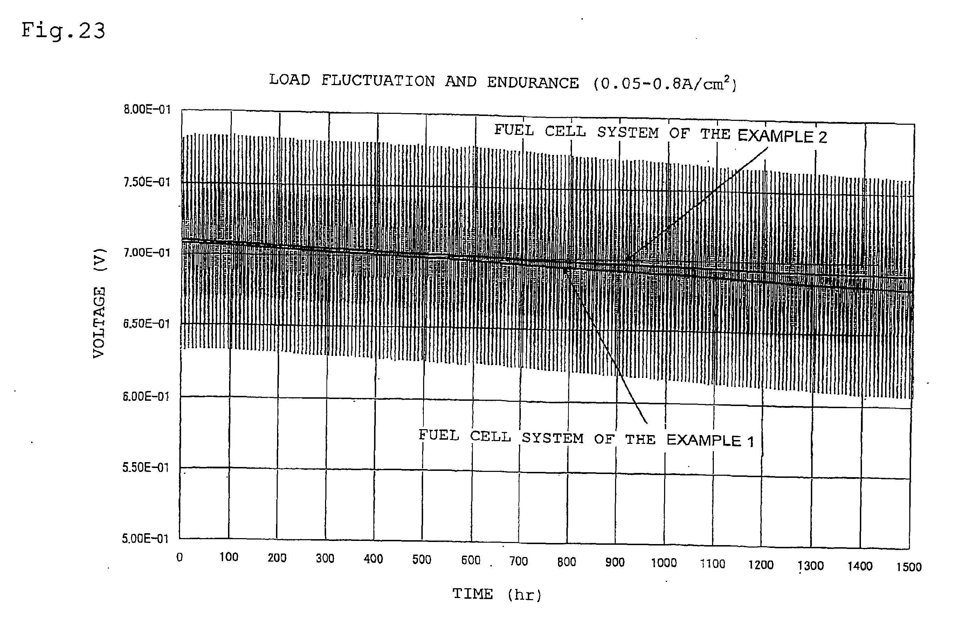

The fuel cell system of the example 2 was used as a comparative control and subjected to the load fluctuation endurance test to which the load was applied for one hour each in the order of 0.05A → 0.2A → 0.4A (rated operation) → 0.8A→ 0.4A→ 0.2A→ 0. 05A. The graph of Fig. 23 shows the mean voltage of the cells in the example 1 and the example 2 when load fluctuation was given repeatedly, and the heavy line indicates the temporal mean value. The temporal mean value was used to compare the endurance of the example 1 with that of the example 2. The example 2 was improved in endurance, as compared with the example 1 and also confirmed for its superiority to the example 1 in the improvement of supply water compliance with the load over the entire area of the stack.

The program of the present invention is a program for allowing a computer to perform the function of the controlling section of the above-described fuel cell system of the invention and a program working in collaboration with a computer.

Further, the recording medium of the invention is a recording medium carrying the program for allowing a computer to perform the entire or partial function of the controlling section of the above-described fuel cell system of the invention and also a recording medium which can be read by a computer and in which the program read by the computer performs the above function in collaboration with the computer.

The function of the above controlling section of the invention means the entire or a partial function of the controlling section.

One utilization of the program of the invention may include a mode which is recorded by a recording medium readable by a computer and operated in collaboration with the computer.

Another utilization of the program of the invention may include a mode which is transmitted through a transmission medium, read by a computer and works in collaboration with the computer.

In addition, recording media include ROM and the like, and transmission media include those such as the Internet and light, electric waves and sound waves.

The above described computer of the invention is not limited to hardware such as a CPUbut also includes firmware, OS and peripheral equipment.

As explained so far, the compositions of the invention may be realized in terms of software and also may be realized in terms of hardware.

The fuel cell system of the invention and the operation method thereof are able to keep the entire area of the MEA in a state of water vapor saturation effectively and more reliably, and the fuel cell system is also well known for cogeneration for household use and the like.

## Claims

1. A fuel cell system comprising,
a stack having a plurality of laminated single cells comprising an electrolyte membrane, a pair of gas diffusion electrodes disposed so as to sandwich said electrolyte membrane therebetween and a separator disposed so as to be interposed between said pair of gas diffusion electrodes from outside and in which gas flow path grooves of supplying fuel gas and oxidizing agent gas respectively to said gas diffusion electrodes are formed,
a gas supplying section of supplying said gas to said stack,
a gas humidifying section disposed between said gas supplying section and said gas flow path grooves for humidifying said gas, and
a controlling section of controlling so that a water vapor content contained in said gas supplied to said gas flow path groove exceeds a saturated water vapor content at the temperature of at least one of said gas flow path groove inlets where said gas is initially consumed at said gas diffusion electrode.

2. The fuel cell system according to Claim 1 wherein said controlling section controls the water vapor content of said gas so that the water vapor contained in said gas will not cause flooding in said electrolyte membrane.

3. The fuel cell system according to Claim 1, wherein said controlling section is provided between said gas flow path grooves and said gas humidifying section and having a buffering section of adjusting the water vapor content of said gas supplied to said plurality of laminated single cells,
said buffering section comprises
a reserve section of reserving water content,
a heating section of heating the water content reserved by the reserve section,
a temperature detecting section of detecting the temperature of said reserved water content, and
a supply controlling section of controlling said heating section so that the temperature of said water content is kept higher than the temperature at the electrode inlet part of said gas flow path grooves to vaporize again said water content and supplying said vaporized water content to at least one of said electrodes.

4. A fuel cell system comprising,
a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside, in which gas flow path grooves of supplying fuel gas and oxidizing agent gas respectively to said gas diffusion electrodes are formed,
a gas supplying section of supplying said gas to said stack,
a gas humidifying section disposed between said gas supplying section and said gas flow path grooves of humidifying said gas, and
a buffering section provided between said gas flow path grooves and said gas humidifying section of adjusting the water vapor content of said gas supplied to saidplurality of the laminated single cells.

5. The fuel cell system according to Claim 4, wherein said buffering section comprises a reserve section of reserving water content,
a heating section of heating the water content reserved by said reserve section,
a temperature detecting section of detecting the temperature of said reserved water content, and
a controlling section of controlling said heating section so that the temperature of said water content is maintained higher than the temperature at the electrode inlet part of said gas flow path grooves to vaporize again said water content and supplying said vaporized water content to said at least one of the electrodes.

6. The fuel cell system according to Claim 5, wherein said reserve section controls a heat amount for condensing the water vapor supplied from said gas supplying section in excess of saturated water vapor content at inner temperatures of said buffering section, and
said controlling section vaporizes the condensed water vapor by using as a heat source at least one or more of the following heats:
(1) waste heat of a reforming equipment,
(2) heat of the fuel gas supplied from said reforming equipment to said stack,
(3) heat obtained by combustion of fuel,
(4) heat obtained by combustion of remaining fuel gas discharged from said stack, and
(5) waste heat of cooling water discharged from said stack.

7. The fuel cell system according to Claim 6, wherein heat obtained by combustion of said fuel or said remaining fuel gas discharged from said stack is obtained from a reforming equipment burner.

8. The fuel cell system according to Claim 6, wherein heat obtained by combustion of said fuel or remaining fuel gas discharged from said stack is obtained from dedicated burning equipment other than a reforming equipment'burner.

9. The fuel cell system according to Claim 6, wherein said controlling section controls the heat amount of said one or more of the heats conducted into saidbuffering section on the basis of detection signals for detecting water vapor content supplied to said stack, thereby water vapor content contained in the gas supplied to said gas flow path grooves is controlled so as to exceed the saturated water vapor content at the temperature of said gas flow path groove inlet where said gas is initially consumed at said gas diffusion electrode.

10. The fuel cell system according to Claim 9, wherein said controlling section controls the heat amount of said one or more the heats by controlling a heat media amount.

11. The fuel cell system according to Claim 9, wherein the control of heat amount of said one or more the heats by said controlling section includes the control of heat amount by said reforming equipment or a dedicated burning equipment.

12. The fuel cell system according to Claim 6, wherein said one or more of the heats are supplied to said controlling section through a direct conduction of heat flux from the heat source.

13. The fuel cell system according to Claim 6, wherein said one or more of the heats are supplied to the controlling section through an indirect conduction of heat flux through the exchange of heat flux from the heat source with cooling water discharged from the stack.

14. The fuel cell system according to Claim 4, wherein the control parameter of said controlling section can be set to plural numbers in response to a plurality of operation modes.

15. The fuel cell system according to Claim 4, wherein said controlling section learns an optimal controlling parameter under operational conditions for controlling.

16. The fuel cell system according to Claim 4, comprising a gas inlet manifold of supplying said gas to said gas flow path grooves wherein said buffering section is directly connected with said gas inlet manifold.

17. The fuel cell system according to Claim 4, comprising a gas inlet manifold of supplying said gas to said gas flow path grooves wherein said buffering section is provided inside said gas inlet manifold.

18. The fuel cell system according to Claim 4, wherein said stack and said buffering section are insulated en bloc.

19. A method for operating a fuel cell system comprising,
a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside in which gas flow path grooves of supplying fuel gas or oxidizing agent gas respectively to said gas diffusion electrodes are formed,
a gas supplying section of supplying the gas to said stack, and
a gas humidifying section disposed between said gas supplying section and said gas flow path grooves of humidifying said gas, wherein the method for operating the fuel cell system comprises a controlling step of controlling so that the water vapor content of the gas supplied to said gas flow path grooves exceeds the saturated water vapor content at the temperature of said gas flow path groove inlet where the gas is initially consumed at said gas diffusion electrode.

20. A method for operating a fuel cell system comprising a stack having a plurality of laminated single cells having an electrolyte membrane, a pair of gas diffusion electrodes disposed so as to sandwich said electrolyte membrane therebetween and a separator disposed so as to be interposed between said pair of gas diffusion electrodes from outside in which gas flow path grooves of supplying fuel gas or oxidizing agent gas respectively to said gas diffusion electrodes are formed,
a gas supplying section of supplying said gas to said stack, and
a gas humidifying section disposed between said gas supplying section and said gas flow path grooves of humidifying said gas, wherein the method for operating the fuel cell system comprises an adjusting step of adjusting the water vapor content of said gas supplied to saidplurality of laminated single cells between said gas flow path grooves and said humidification section.

21. A program of the fuel cell system according to Claim 1 for allowing a computer to function as a controlling section of controlling so that the water vapor content of said gas supplied to said gas flow path grooves exceeds the saturated water vapor content at the temperature of said gas flow path groove inlet where the gas is initially consumed at said gas diffusion electrode.

22. A recording medium recording the program according to Claim 21, wherein the recording medium can be subjected to computer processing.
